# EUROPÄISCHE PATENTSCHRIFT

(11) **EP 2 313 314 B1**
(45) Veröffentlichungstag und Bekanntmachung des Hinweises auf die Patenterteilung: **02.09.2015**
(21) Anmeldenummer: 09781219.2
(22) Anmeldetag: 29.07.2009
(51) Int. Cl.: B64D 11/00

(54) **EINHEIT ZUR UNTERBRINGUNG VON FLUGZEUGBESATZUNGSMITGLIEDER**
UNIT FOR ACCOMODATION OF AIRCRAFT CREW MEMBERS
UNITÉ POUR ACCOMODATION DES MEMBRES D'ÉQUIPAGE D'AERONEF

(30) Priorität: 30.07.2008 DE 102008035375; 30.07.2008 US 137362 P
(43) Veröffentlichungstag der Anmeldung: 27.04.2011
(73) Patentinhaber: Airbus Operations GmbH, 21129 Hamburg (DE)
(72) Erfinder: ERGENCI, Seher, 22111 Hamburg (DE); BREUER, Matthias, 22147 Hamburg (DE); WARNER, Holger, 21635 Jork (DE)
(74) Vertreter: Maiwald Patentanwalts GmbH
(86) Internationale Anmeldenummer: PCT/EP2009/059780
(87) Internationale Veröffentlichungsnummer: WO 2010/012753

(56) Entgegenhaltungen:
- EP-A1- 1 106 502
- EP-A2- 0 368 609
- WO-A1-2005/080196
- US-A- 3 898 704
- US-A1- 2003 104 907
- US-A1- 2006 060 704

## Beschreibung

### GEBIET DER ERFINDUNG

Die vorliegende Erfindung betrifft eine Unit oder Einrichtung zur Unterbringung von zumindest einem Mitglied einer Flugzeugbesatzung sowie ein crew rest compartment (Ruheabteil für die Besatzung), das eine Unit aufweist, Außerdem betrifft die Erfindung ein Flugzeug mit einer crew rest compartment sowie die Verwendung eines crew rest compartment.

### HINTERGRUND DER ERFINDUNG

In Flugzeugen für Langstreckenflüge gibt es geschlossene Schlaf- und Ruheräume für die Flugzeugbesatzungen, Diese sind ausschließlich für die Benutzung durch die Crew gedacht und so spezifisch ausgelegt, dass die Crew darin ihre Ruhe- und Schlafphasen auf Betten und oder Sitzplätzen verbringen können.

Die Ruhe-/Schlafräume für die Mitglieder der Flugzeugbesatzung werden als Crew Rest Compartments (CRC) bezeichnet. CRCs sind separate Räume, die nur für die Besatzungsmitglieder zur Verfügung stehen. Die Besatzungsmitglieder teilen sich in zwei Gruppen auf: die Flight Crew, das sind die Piloten, und die Cabin Crew, die Kabinenbesatzung, die häufig als Stewardessen, bzw. Stewards bezeichnet werden. Piloten und Kabinenbesatzung haben getrennte Ruheräume, daher unterscheidet mal zwischen Flight Crew Rest Compartment **(**FCRC) für die Piloten und dem Cabin Crew Rest Compartment (CCRC) für die Kabinenbesatzung.

Crew Rest Compartments sind bei Langstreckenflügen mit langer Flugdauer von 8-18 Stunden notwendig, da diese Flüge von zwei Besatzungsmannschaften geflogen werden. So ergibt sich die Möglichkeit, die servicefreie Zeit zwischen 1. und 2. Mahlzeit an Bord zu halbieren und dabei jeweils 50% der Crew eine Ruhezeit zu gewähren, während die andere Hälfte der Crew "Wache" hat und neben der Überwachung der Kabine und der Waschräume, den Gästen für die Bereitstellung von Getränken und Snacks zur Verfügung steht. Um eine ausreichende Erholung der Besatzung zu garantieren, werden an Crew Rest Compartments in der Regel höhere Anforderungen bzgl. Schalldämmung gestellt als an die normale Flugzeugkabine.

Die Flight Crew Rest Compartments werden immer in der Nähe des Cockpits installiert, so kann bei Notfällen die zweite Besatzung schnell eingreifen. Sie sind sehr einfach ausgestattet und beinhalten meistens einen Schlafplatz und einen Sitzplatz. Die Cabin Crew Rest Compartments werden in verschiedenen Bereichen im Flugzeug eingebaut. Sie bieten mehr Komfort gegenüber den FCRCs. Die Ausstattung dieser Räume beinhaltet einen abtrennbaren Umkleidebereich mit Spiegel, um sich für den Einsatz frisch machen zu können. Dies ist wichtig, weil die Kabinenbesatzungen den direkten Kontakt zu den Passagieren haben und die Airline repräsentieren.

WO 2005/080196 A1 beschreibt eine Flugzeugkabine mit Passagiercompartimenten.

EP 0 368 609 A2 beschreibt Flugzeugsitze mit Haltearmen für Displays.

EP 1 106 502 A1 beschreibt eine Kabinenpartition vor einer Außentür, welche über eine Falltür zugänglich ist.

US 2003/0104907 A1 beschreibt einen Fitnessbereich für eine Flugzeugkabine mit einem hochklappbaren Laufband.

US 3,898,704 beschreibt ein Etagenbett für eine Flugzeugkabine, das zu einem Sitz umgebaut werden kann.

US 2006/0060704 A1 beschreibt eine Erste-Hilfestation für eine Flugzeugkabine.

### ZUSAMMENFASSUNG DER ERFINDUNG

Auf langen Flügen (z.B. Interkontinentalflügen) möchten die Airlines ihren Fluggästen mehr bieten als stundenlanges Sitzen. Dem Fluggast sollten Möglichkeiten eröffnet werden, die Flugzeit sinnvoll zu nutzen. Andererseits bietet ein Flugzeug nur sehr begrenzten Raum, um derartigen Anforderungen nachzukommen.

Es kann daher als eine Aufgabe der vorliegenden Erfindung betrachtet werden, dem Fluggast Möglichkeiten anzubieten, um seine Flugzeit sinnvoll oder kurzweilig zu gestalten.

Diese Aufgabe wird in den unabhängigen Ansprüchen gelöst. Weitere vorteilhafte Ausgestaltungen der Erfindung ergeben sich aus den Unteransprüchen.

Die Erfindung soll eine alternative Nutzung der CRCs in den Phasen ermöglichen, in denen sie nicht als Ruheraum für die Mitglieder der Besatzung benötigt werden.

Als ersten Aspekt der Erfindung wird eine Unit zur Unterbringung von zumindest einem Mitglied einer Flugzeugbesatzung zur Verfügung gestellt, wobei die Unit derart ausgestaltet ist, dass sie in einem crew rest compartment eines Flugzeugs angeordnet werden kann, wobei die Unit erste Mittel aufweist zum Verändern des Raumbedarfs der Unit, wobei die Unit umfasst: eine Liegemöglichkeit für das Mitglied der Flugzeugbesatzung, wobei die Liegemöglichkeit erste Mittel aufweist zum Versetzen der Liegemöglichkeit.

Das Verändern des Raumbedarfs der Unit kann dazu genutzt werden, dass der freie Raum innerhalb der CRC der jeweiligen Verwendung angepasst werden kann. Typischerweise weist ein Unit 2 oder 3 Liegemöglichkeiten auf, wobei die Liegemöglichkeiten übereinander angeordnet sind, ähnlich einem Stockbett bzw. Etagenbett. Die Liegemöglichkeiten sind überlicherweise als Bett mit Matraze, Kissen und Decke ausgebildet. Die erste Mittel sind z.B. Gelenke, wodurch eine Beweglichkeit der Liegemöglichkeiten erzielt wird. Die Beweglichkeit der Liegemöglichkeit kann dazu genutzt werden ein räumliches Versetzen zu erreichen. Versetzen der Liegemöglichkeit heißt hier z.B. translatorisches verschieben oder drehen um eine Achse, wobei auch das Verschieben oder Drehen nur eines Teils der Liegemöglichkeit umfasst ist.

Das crew rest compartment wird zur Unterbringung von zumindest einem Mitglied einer Flugzeugbesatzung zur Verfügung gestellt, wobei das crew rest Compartment derart ausgestaltet ist, dass es in einem Flugzeug angeordnet werden kann, wobei das crew rest compartment eine Unit nach einem der Ansprüche 1 bis 8 umfaßt.

Das crew rest compartment dient zum Ausruhen bzw. Schlafen der Besatzung eines Flugzeugs, wobei es zwei unterschiedliche crew rest compartments gibt, nämlich eine flight crew rest compartment und ein cabin crew rest compartment. Das erste compartment dient den Piloten, das zweite compartment der Kabinenmannschaft.

Als zweiten Aspekt der Erfindung wird ein Flugzeug zur Verfügung gestellt, wobei das Flugzeug ein crew rest compartment nach einem der Ansprüche 1 bis 9 umfasst.

Als dritten Aspekt der Erfindung wird die Verwendung eines crew rest compartment nach einem der Ansprüche 1 bis 9 zur Verfügung gestellt, wobei das crew rest compartment als Aufenthaltsraum für Passagiere eines Flugzeugs verwendet wird. Beispielhafte Ausführungsformen werden in den abhängigen Ansprüchen beschrieben.

Gemäß einer beispielhaften Ausführungsform der Erfindung wird eine Unit zur Verfügung gestellt, wobei die Liegemöglichkeit erste Mittel aufweist zum Verschieben der Liegemöglichkeit innerhalb der Unit.

Das Verschieben der Liegemöglichkeiten eröffnet die Möglichkeit die Liegemöglichkeiten innerhalb der Unit nach oben oder nach unten (eventuell auch in einer horizontalen Ebene) zu verschieben, wodurch freier Raum innerhalb der Unit geschaffen wird.

In einer weiteren erfindungsgemäßen Ausführungsform wird ein Unit zur Verfügung gestellt, wobei die Liegemöglichkeit erste Mittel aufweist zum Zusammenklappen der Liegemöglichkeit.

Das Zusammenklappen umfasst auch das Zusammenfalten, wodurch die Liegemöglichkeit insgesamt einen geringeren Raumbedarf benötigt. Aufgrund der Umwandlung in eine kompaktere Form kann der freie Raum in der Unit und damit in der CRC vergrößert werden.

Gemäß einem weiteren Ausführungsbeispiel der vorliegenden Erfindung wird eine Unit zur Verfügung gestellt, wobei die Liegemöglichkeit erste Mittel aufweist zum Überführen der Liegemöglichkeit von einer im wesentlichen horizontalen Ausrichtung in eine im wesentlichen vertikalen Ausrichtung.

Denkbar wäre auch, dass die Liegemöglichkeit nur schräg abgewinkelt wird, auch in diesem Fall würde sich eine Vergrößerung des freien Raums ergeben. Das Unit muss natürlich derart ausgebildet sein, dass aus einer schrägen oder senkrichten Ausrichtung der Liegemöglichkeit auch wieder eine horizontale Ausrichtung der Liegemöglichkeit erreicht werden kann.

Gemäß einer beispielhaften Ausführungsform der Erfindung wird eine Unit zur Verfügung gestellt, wobei die Unit zweite Mittel aufweist zum Verändern des Raumbedarfs der Unit, wobei die Unit umfasst: ein Frontpanel, wobei das Frontpanel zweite Mittel aufweist zum Versetzen des Frontpanels.

Das Frontpanel dient z.B. dem Befestigen der Liegemöglichkeit. Das Frontpanel muss Ausnehmungen aufweisen, damit ein Mitglied der Crew die Liegemöglichkeit nutzen kann. Die Ausnehmungen können derart sein, dass das Frontpanel nur noch zur Befestigung der Liegemöglichkeit dient und keine Sichtschutzfunktion mehr wahr nimmt.

Versetzen des Frontpanels heißt hier z.B. translatorisches verschieben oder drehen um eine Achse, wobei auch das Verschieben oder Drehen nur eines Teiles der Liegemöglichkeit umfasst ist.

Das Frontpanel weist zweite Mittel zum Zusammenklappen des Frontpaneels auf.

Die zweite Mittel können z.B. Gelenke sein, wodurch eine Faltbarkeit des Frontpanels erreicht wird. Die Gelenke können auch innerhalb des Frontpanels angeordnet sein, wodurch separate Teile des Frontpanels zusammengelegt werden können.

In einer weiteren erfindungsgemäßen Ausführungsform wird eine Unit zur Verfügung gestellt, wobei das Frontpanel zweite Mittel aufweist zum Auflegen von zumindest einem Teil des Frontpanels auf die Liegemöglichkeit.

Das Auflegen zumindest eines Teils eines Frontpanels auf die Liegemöglichkeit eröffnet die Möglichkeit in kompakter Weise eine Kombination aus Liegemöglichkeit und Frontpanel anzuordnen. Hierdurch können die sperrigen Liegemöglichkeiten und das sperrige Frontpanel mit geringem Raumbedarf verstaut werden.

In einer weiteren erfindungsgemäßen Ausführungsform wird eine Unit zur Verfügung gestellt, wobei die Unit dritte Mittel aufweist zum Verändern des Raumbedarfs der Unit, wobei die Unit umfasst: eine Seitenwand, wobei die Seitenwand dritte Mittel aufweist zum Versetzen der Seitenwand.

Die Unit kann auch zwei Seitenwände umfassen, falls eine Seitenwand nicht ohnehin mit einer Wand des CRC zusammenfällt.

Versetzen der Seitenwand heißt hier z.B. translatorisches verschieben oder drehen um eine Achse, wobei auch das Verschieben oder Drehen nur eines Teils der Liegemöglichkeit umfasst ist.

Gemäß einem weiteren Ausführungsbeispiel der vorliegenden Erfindung wird eine Unit zur Verfügung gestellt, wobei die Seitenwand dritte Mittel aufweist zum Drehen der Seitenwand um eine Achse.

Die Seitenwand kann z.B. zu einer Rückseite der Unit weggedreht werden. Ferner kann die Seitenwand auch aus einzelnen Teilen bestehen, die durch Gelenke verbunden sind.

Gemäß einer beispielhaften Ausführungsform der Erfindung wird eine Unit zur Verfügung gestellt, wobei die Seitenwand dritte Mittel aufweist zum Zusammenklappen der Seitenwand.

Die Seitenwand stellt ein sperriges Teil der Unit dar, da sie z.B. senkrecht von der Außenwand der CRC in die Mitte des CRC ragt. Ein Zusammenklappen oder Zusammenfalten der Seitenwand führt daher zu einem vergrößerten freien Raum der CRC.

In einer weiteren erfindungsgemäßen Ausführungsform wird ein crew rest compartment zur Verfügung gestellt mit einer Ablagemöglichkeit, wobei die Ablagemöglichkeit vierte Mittel aufweist zum Versetzen der Ablagemöglichkeit.

Mit Hilfe der vierten Mittel kann die Ablagemöglichkeit z.B. unterhalb des Bodens des CRC oder oberhalb der Decke des CRC verfahren werden, wodurch sperrige Ablagemöglichkeiten verstaut werden können. Die Ablagemöglichkeit kann ein Tisch oder eine kleinere Ablagefläche sein, wobei die Ablagemöglichkeit für die Nutzung mehrerer Personen gleichzeitig, etwa als Konferenztisch, oder zur Nutzung für nur eine einzelne Person, etwa als Nachttisch, bestimmt sein kann.

Gemäß einem weiteren Ausführungsbeispiel der vorliegenden Erfindung wird ein crew rest compartment zur Verfügung gestellt, umfassend einen Monitor, wobei der Monitor vierte Mittel aufweist zum Versetzen des Monitors.

Gemäß einer beispielhaften Ausführungsform der Erfindung wird ein crew rest compartment zur Verfügung gestellt, wobei die vierte Mittel einen Teleskoparm umfassen.

Ein Teleskoparm bietet die Möglichkeit, dass der Arm selbst eingefahren wird, wodurch das daran befestigte Element, etwa ein Monitor oder eine slot machine, zurückgefahren wird. Hierdurch kann das CRC freigeräumt werden, bzw. für die Benutzung durch Passagiere vorbereitet werden.

In einer weiteren erfindungsgemäßen Ausführungsform wird eine Verwendung zur Verfügung gestellt, wobei das crew rest compartment für sportliche Tätigkeiten der Passagiere verwendet wird.

Als Idee der Erfindung kann angesehen werden, ein crew rest compartment, also den Ruhe- und Schlafbereich der Flugbesatzung, derart auszulegen, dass in Zeiten zu denen die Flugbesatzung den crew rest compartment nicht nutzt, dieser derart umgerüstet werden kann, dass das crew rest compartment von Fluggästen anderweitig genutzt werden kann. Eine alternative Nutzung ist insbesondere als Konferenzraum, als Fitnessstudio oder zur allgemeinen Unterhaltung (Glücksspiele, Kinoveranstaltung) vorstellbar. Hierbei soll insbesondere das crew rest compartment der cabin crew genutzt werden, da deren crew rest compartment üblicherweise von vornherein geräumiger gestaltet ist, was eine alternative Nutzung eher ermöglicht. Da die Ruheräume nur zu spezifischen Zeiten genutzt werden, ist eine alternative Nutzung dieser Bereiche möglich. Die Ruheräume sind daher so umzurüsten, dass eine Benutzung durch den Passagier während der Flugphase möglich ist. Hierdurch entsteht ein erweitertes Serviceangebot für den Passagier. Der Raum wird erfindungsgemäß durch das Modifizieren der Betten und Wände dahingehend verändert, dass eine Raumvergrößerung erzielt wird. Um das Umrüsten zu ermöglichen können die Betten als Klappbetten ausgebildet sein. Feste Wände können verschoben werden, wodurch ein größerer freier Raum innerhalb des CRC erreicht wird. Geräte für die alternative Nutzung können aus Stauräumen (innerhalb des CRCs) herausgeholt/herausgeklappt werden und in die zu benutzende Stellung gebracht werden.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
- Fig. 1:: crew rest compartment in perspektivischer Sicht von oben, wobei fünf Units dargestellt sind,
- Fig. 2a -2d:: Unit in einer perspektivischen Sicht, sowie in einem Aufriss (siehe Fig. 2b, in einem Grundriss (siehe Fig. 2c) und in einem Seitenriss (siehe Fig. 2d),
- Fig. 3a - 3c:: Klappvariante, wobei die Liegemöglichkeiten nach oben innerhalb der Unit verschoben werden und das Frontpanel zusammengeklappt wird,
- Fig. 4a - 4c:: Klappvariante, wobei die Liegemöglichkeiten nach oben verschoben werden und die einzelnen Teile des Frontpanel zusammengelegt werden und anschließend parallel zueinander angeordnet sind,
- Fig. 5a - 5c:: Klappvariante, wobei einzelne Teile des Frontpanels auf die Liegemöglichkeiten gelegt werden und anschließend die Frontpanel mit den Liegemöglichkeiten nach oben verschoben werden,
- Fig. 6a - 6c:: Klappvariante, wobei einzelne Teile des Frontpanel auf die Liegemöglichkeiten geklappt werden anschließend die Frontpanel-Liegemöglichkeits-Kombination zur Rückseite der Unit geklappt wird,
- Fig. 7a - 7c:: Klappvariante, wobei die Liegemöglichkeit in einzelne Teile separiert ist und diese einzelnen Teile zusammengeklappt werden, wobei das Frontpanel um die zusammengeklappte Liegemöglichkeit angeordnet wird,
- Fig. 8a - 8c:: Klappvariante, wobei die Liegemöglichkeit zusammengeklappt wird und ein Teil des Frontpanels an die zusammengeklappte Liegemöglichkeit angeordnet wird und dein zweiter Teil des Frontpaneels zur Rückwand der Unit verfahren wird,
- Fig. 9a - 9c:: Klappvariante, wobei die Liegemöglichkeit weggeklappt wird und das Frontpanel zur Rückwand der Unit verfahren wird und die Seitenwände zur Rückseite der Unit weggeklappt werden,
- Fig. 10a - 40c:: Klappvariante, wobei die Liegemöglichkeiten weggeklappt werden und das Frontpanel und die Seitenwände zur Rückseite der Unit geklappt werden,
- Fig. 11a - 11d:: Unit, wobei die Unit in perspektivischer Ansicht mit maximalem Volumen (siehe Fig. 11a) und mit minimalem Volumen (siehe Fig. 11b) und die Unit im Grundriss mit maximalem Volumen (siehe Fig. 11c) und mit minimalem Volumen (siehe Fig. 11d) dargestellt ist,
- Fig. 12a - 12d:: Unit, wobei die Unit in perspektivischer Ansicht mit maximalem Volumen (siehe Fig. 12a) und mit minimalem Volumen (siehe Fig. 12b) und die Unit im Grundriss mit maximalem Volumen (siehe Fig. 12c) und mit minimalem Volumen (siehe Fig. 12d) dargestellt ist,
- Fig. 13a - 13d:: Unit, wobei die Unit in perspektivischer Ansicht mit maximalem Volumen (siehe Fig. 13a) und mit minimalem Volumen (siehe Fig. 13b) und die Unit im Grundriss mit maximalem Volumen (siehe Fig. 13c) und mit minimalem Volumen (siehe Fig. 13d) dargestellt ist,
- Fig. 14a - 14b:: Crew rest compartment mit fünf Units, wobei die Units im Grundriss mit maximalem Volumen (siehe Fig. 14a) und mit minimalem Volumen (siehe Fig. 14b) dargestellt sind,
- Fig. 15:: Cabin Crew Rest Compartment aus der Vogelperspektive, wobei die Units einen maximalen Raumbedarf aufweisen,
- Fig. 16:: Cabin Crew Rest Compartment aus der Vogelperspektive, wobei die Units einen minimalen Raumbedarf aufweisen,
- Fig. 17a 17b:: Crew rest compartment zur Verwendung als Massage- und Ruheraum aus der Vogelperspektive (siehe Fig. 17a) und in einer seitlichen perspektivischen Ansicht (siehe Fig. 17b),
- Fig. 18:: Crew rest compartment zur Verwendung als Massage- und Ruheraum aus der Vogelperspektive,
- Fig. 19:: Crew rest compartment zur Verwendung als Massage- und Ruheraum aus der Vogelperspektive mit schematisch angedeuteten Körpern,
- Fig. 20:: Crew rest compartment zur Verwendung als Massage- und Ruheraum aus einer seitlichen perspektivischen Sicht,
- Fig. 21:: Crew rest compartment zur Verwendung als Massage- und Ruheraum aus der Vogelperspektive mit schematisch angedeuteten Körpern,
- Fig. 22:: Crew rest compartment zur Verwendung als Konferenzraum aus der Vogelperspektive,
- Fig. 23:: Crew rest compartment zur Verwendung als Konferenzraum aus der Vogelperspektive,
- Fig. 24:: Crew rest compartment zur Verwendung als Konferenzraum aus der Vogelperspektive,
- Fig. 25:: Crew rest compartment zur Verwendung als Konferenzraum aus der Vogelperspektive,
- Fig. 26:: Crew rest compartment zur Verwendung als Konferenzraum aus der Vogelperspektive,
- Fig. 27:: Crew rest compartment zur Verwendung als Konferenzraum aus der Vogelperspektive,
- Fig. 28:: Crew rest compartment zur Verwendung als Konferenzraum aus der Vogelperspektive mit schematisch angedeuteten Körpern,
- Fig. 29a- 29b:: Crew rest compartment zur Verwendung als Konferenzraum mit schematisch angedeuteten Körpern aus der Froschperspektive (siehe Fig. 29a) und aus einer seitlichen Ansicht (Fig. 29b),
- Fig. 30:: Crew rest compartment zur Verwendung als Konferenzraum aus der Vogelperspektive mit schematisch angedeuteten Körpern,
- Fig. 31a - 31c:: Crew rest compartment zur Verwendung als Konferenzraum mit schematisch angedeuteten Körpern aus einer seitlichen perspektivischen Ansicht (siehe Fig. 31 a), aus der Froschperspektive (siehe Fig. 31b und Fig. 31c),
- Fig. 32:: Crew rest compartment zur Verwendung als Konferenzraum aus der Vogelperspektive mit schematisch angedeuteten Körpern,
- Fig. 33a - 33b:: Crew rest compartment zur Verwendung als Konferenzraum mit schematisch angedeuteten Körpern aus einer seitlichen perspektivischen Ansicht,
- Fig. 34:: Slot machine,
- Fig. 35:: Crew rest compartment zur Verwendung als Glücksspielraum aus der Vogelperspektive,
- Fig. 36:: Crew rest compartment zur Verwendung als Glücksspielraum aus der Vogelperspektive,
- Fig. 37:: Crew rest compartment zur Verwendung als Glücksspielraum mit schematisch angedeuteten Körpern aus der Vogelperspektive,
- Fig. 38:: Crew rest compartment zur Verwendung als Glücksspielraum mit schematisch angedeuteten Körpern aus der Vogelperspektive,
- Fig. 39:: Crew rest compartment zur Verwendung als Fitnessstudio aus der Vogelperspektive,
- Fig. 40:: Crew rest compartment zur Verwendung als Fitnessstudio aus der Vogelperspektive,
- Fig. 41:: Crew rest compartment zur Verwendung als Fitnessstudio aus der Vogelperspektive,
- Fig. 42:: Crew rest compartment zur Verwendung als Fitnessstudio aus der Vogelperspektive,
- Fig. 43:: Crew rest compartment zur Verwendung als Fitnessstudio mit schematisch angedeuteten Körpern aus der Vogelperspektive,
- Fig. 44:: Crew rest compartment zur Verwendung als Fitnessstudio mit schematisch angedeuteten Körpern aus der Vogelperspektive,
- Fig. 45:: Crew rest compartment zur Verwendung als Fitnessstudio mit schematisch angedeuteten Körpern aus der Vogelperspektive,
- Fig. 46:: Crew rest compartment zur Verwendung als Fitnessstudio mit schematisch angedeuteten Körpern aus der Vogelperspektive,
- Fig. 47:: Crew rest compartment zur Verwendung als Fitnessstudio mit schematisch angedeuteten Körpern aus der Vogelperspektive.

### DETAILLIERTE BESCHREIBUNG BEISPIELHAFTER AUSFÜHRUNGSFORMEN

Die FCRCs (flight crew rest compartments) können üblicherweise nicht alternativ genutzt werden, da sie sehr wenig Platz bieten und daher für eine Mehrfachnutzung ungeeignet sind. Ein CRC, das auch zur Benutzung für Fluggäste vorgesehen wird, sollte aus Sicherheitsgründen für die Crew gut einsehbar und zugänglich sein, damit jederzeit möglichst schnell eine Durchsicht stattfinden kann und bei Problemen die Crew zur Hilfe kommen kann. Ferner ist ein CRC für eine Mehrfachnutzung eher geeignet, das einen größeren Raum zur Verfügung stellt, da dadurch sich mehr Nutzungsmöglichkeiten ergeben können. Das CRC, das auch von Fluggästen genutzt werden soll, sollte eine lichte Höhe aufweisen, die ein bequemes Stehen ermöglicht.

Das CRC wird durch Modifikationen für eine alternative Nutzung vorbereitet. Bei den Modifikationen handelt es sich darum, dass bestehende Einrichtungsgegenstände in platzsparender Weise entfernt, weggeklappt oder verschoben werden können. Insbesondere Betten und Tische müssen hierzu wegklappbar oder verschiebbar ausgestaltet werden.

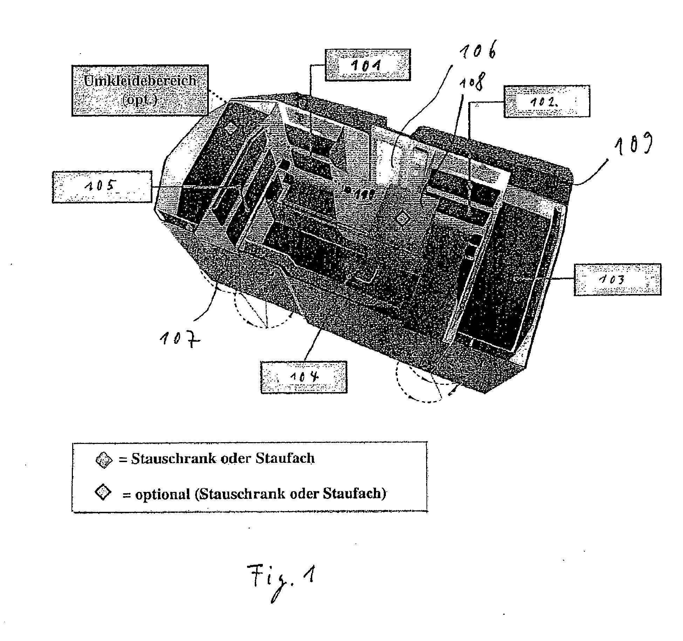

Fig. 1 zeigt beispielhaft ein crew rest Compartment (CRC). Dieses CRC umfasst mehrere Units 101, 102, 103, 104, 105, wobei als Unit typischerweise eine Baueinheit mit mehreren Betten und z.T. Staufächern bezeichnet wird. Insgesamt sind fünf Units dargestellt. Die Unit 101 umfasst zwei Betten und ein oberes Staufach. Die Unit 102 umfasst zwei Betten und ein oberes Staufach. Die Unit 102 kann ferner ein drittes Bett aufweisen, das klappbar ausgebildet ist. Alternativ sind beide Units 101 und 102 identisch ausgebildet. Das dritte Bett kann daher je nach Bedarf genutzt werden. Die Unit 103 umfasst üblicherweise drei Betten, wobei ein Bett klappbar ausgebildet ist, um nötigenfalls Stauraum oder eine Aufenthaltsmöglichkeit zur Verfügung zu stellen. Die Unit 104 umfasst drei Betten. Die Unit 105 umfasst zwei Betten und ein oberes Staufach, wobei nötigenfalls das obere Staufach als drittes Bett umgerüstet werden kann. Die CRC weist ferner einen seitlichen schmalen Stauschrank 109 neben Unit 103 auf. Ferner zeigt die Fig. 1 einen Stauschrank 106 zwischen Unit 101 und Unit 102, wobei dieser Stauschrank 106 eine Spiegeltür aufweist. Der Bereich vor dem Stauschrank 106 stellt einen Umkleidebereich dar, der mit einem Klappstuhl ausgestattet sein kann. Diese Umkleidebereich ist durch eine flexible Trennwand 110 vom Rest des CRC getrennt. Das CRC ist über zwei Türen 107 zugänglich. Das CRC weist eine Klimatisierung auf, die eine generelle Luftzufuhr für das CRC und für die einzelnen Betten gewährleistet, wobei die Klimatisierung Luftauslässe und zusätzliche individuell verstellbare Luftduschen und eine aktive Luftabsaugung für das CRC aufweist sowie ferner sicher stellt, dass auch bei geschlossenen Vorhängen die Luftzirkulation gesichert ist. Grundsätzlich wird dabei die Frischluft von der Generalklimaanlage bezogen. Die verteilte Luft wird innerhalb des Crew Rest Compartments an jedes Bett und an die Decke verteilt. Ferner sind die Luftauslässe akustisch optimiert, wodurch eine hohe Schalldämmung gewährleistet wird. Außerdem wird ein individueller Luftauslass für jedes Bett zur Verfügung gestellt.

Die Temperatur innerhalb des CRC kann elektronisch vom Inneren des Compartments zwischen 15°-25° geregelt und eingestellt werden. Aus Sicherheitsgründen muss im CRC für jedes Bett ein Sauerstoffbehälter mit Sauerstoffmaske vorgesehen sein. Innerhalb des Gangbereichs des CRC müssen zwei Sauerstoffbehälter mit 2 Masken installiert sein. Ferner muss innerhalb des Umkleidebereichs ein Sauerstoffbehälter zur Verfügung stehen.

Bei der Umgestaltung der Units müssen Bauräume für den Versorgungskanal und die Service-Einheit berücksichtigt werden. Jeder Schlafplatz hat seinen eigenen Versorgungskanal mit den Klimaleitungen und ist auch mit einer sogenannten PSU Einheit versehen, die sich im Kopfbereich befindet. In der PSU Einheit ist die Sauerstoffmaske, ein Leselicht und ein individuell verstellbarer Luftauslass untergebracht. Im Kopfbereich befinden sich zudem noch der Internetanschluss, Kopfhöreranschluss (optional) und die Fernbedienung für den IFE Monitor (In-Flight Entertainment), der am Fußende angebracht ist.

Für den Platzbedarf der Klimakanäle wird ein Mindestabstand von 100 mm Tiefe zur Wand festgelegt. Je nach Bauraum kann dieser Abstand variieren. Zudem ist noch zu berücksichtigen, dass die PSU an einer anderen Stelle untergebracht werden muss, die von der Modifikation nicht betroffen ist. Sie muss aber im Kopfbereich positioniert werden, da im Notfall die Sauerstoffmasken, die sich darin befinden, schnell griffbereit sein müssen.

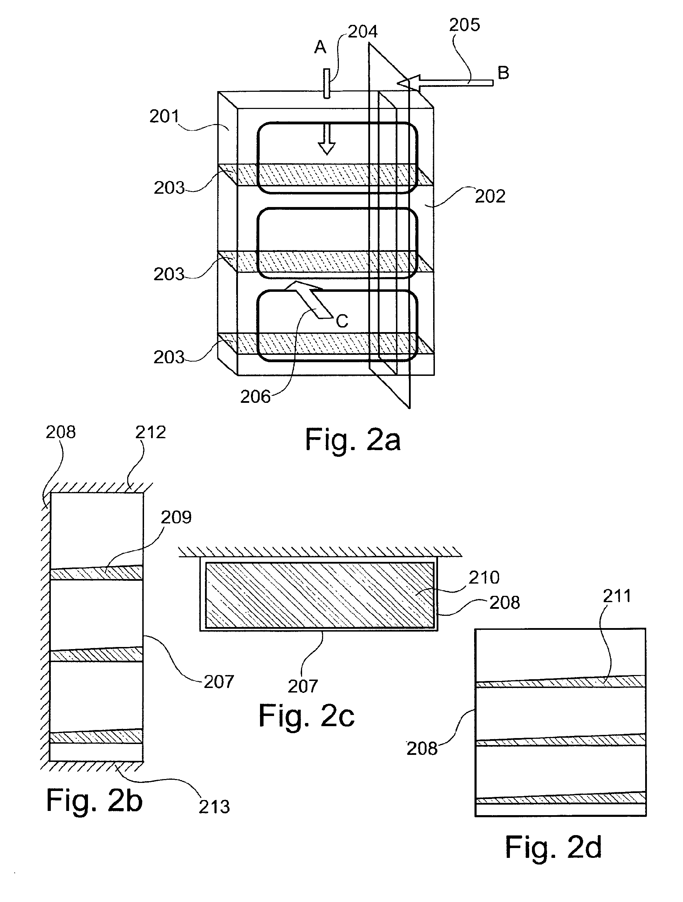

Fig. 2a zeigt eine Unit mit drei Betten 203. Die Betten 203 sind von einer Seite 202 zugänglich und beispielsweise an einer Wand 201 der Unit mit dem restlichen CRC verbunden. Der Pfeil 204 zeigt die Blickrichtung, die zur Darstellung der Fig. 2c führt. Der Pfeil 205 zeigt die Blickrichtung, die zur Darstellung der Fig. 2b führt und der Pfeil 206 zeigt die Blickrichtung, die zur Darstellung der Fig. 2d führt.

Fig. 2b zeigt eine seitliche Ansicht eines Units. Hierbei ist die Unit mit seiner Wand 208 sowie der Decke 212 und dem Boden 213 mit dem CRC verbunden. Ferner zeigt Fig. 2b die Betten 209 sowie das Frontpanel 207.

Fig. 2c zeigt die Unit in Draufsicht, wobei ein Bett 210 dargestellt ist. Ferner ist eine Seitenwand der Unit 208 sowie das Frontpanel 207 dargestellt.

Fig. 2d zeigt in seitlicher Ansicht von vorne die Unit, wobei die Betten 211 sowie die seitliche Wand 208 der Unit dargestellt sind.

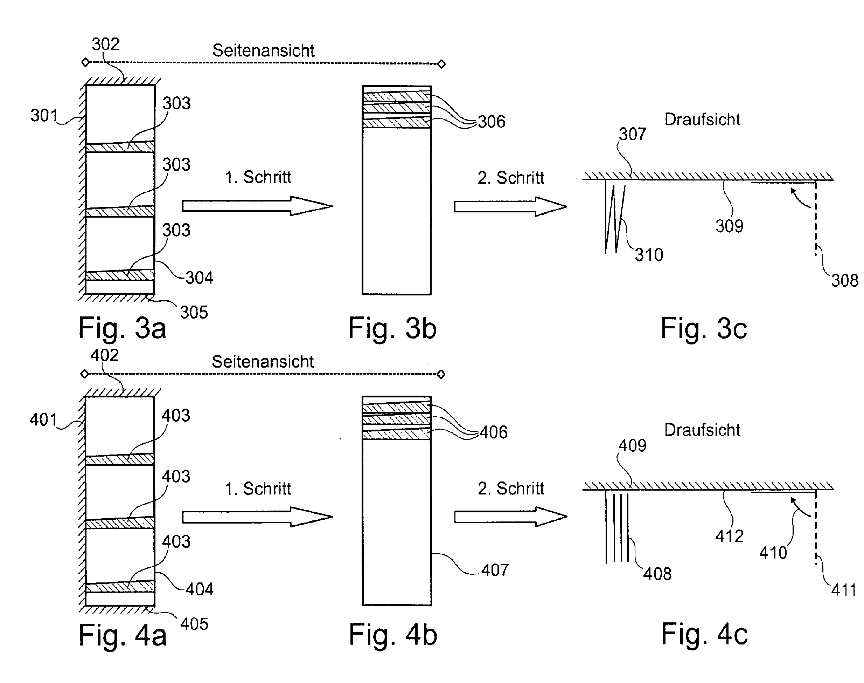

Fig. 3a zeigt ein Unit in seitlicher Ansicht, wobei drei Betten 303 dargestellt sind. Ferner ist ein Frontpanel 304 dargestellt, das Öffnungen aufweist, wodurch die Betten 303 zugänglich sind. Das Unit ist an seiner Rückseite 301, am Boden 305 sowie an seiner Decke 302 mit dem restlichen CRC verbunden.

Fig. 3b zeigt in derselben seitlichen Ansicht das Unit, wobei allerdings die Betten 306 nach oben zusammengeschoben sind. Hierdurch ergibt sich ein leer geräumter Raum innerhalb des Units.

Fig. 3c zeigt in Draufsicht das Unit nachdem das Frontpanel 310 gefaltet wurde. Außerdem ist die Rückseite 307 des Unit dargestellt, die mit dem restlichen CRC verbunden ist. Das Unit kann diverse Platten 308, 309 umfassen, die z.B. als Ablage dienen können. Diese Platten 308, 309 können klappbar ausgestaltet sein, wodurch die Platten zur Rückseite 307 des Unit geklappt werden können und nicht mehr hervorstehen. Fig. 3c zeigt eine Ablage 308 nicht weggeklappt und dieselbe Ablage 309 zur Rückwand 307 weggeklappt.

Fig. 4a zeigt in Seitenansicht ein Unit mit drei Betten 403, einem Frontpanel 404. Die Rückseite 401, die Decke 402 sowie der Boden 405 der Unit sind mit dem restlichen CRC verbunden.

Fig. 4b zeigt das Unit, wobei die Betten 406 nach oben zusammen geschoben angeordnet sind. Hierdurch entsteht im Bereich darunter ein freier Raum.

Fig. 4c zeigt das Frontpanel 310, das in senkrechte Teile aufteilbar ist, wobei die einzelnen Teile hintereinander an die Seite geschoben sind. Fig. 4c zeigt ferner Seitenwände 411, 412, wobei zum einen die Situation dargestellt ist, dass die Seitenwand 411 senkrecht von der Rückseite 409 der Unit absteht. Ferner ist dargestellt wie die Seitenwand 412 zur Rückseite 409 der Unit geklappt angeordnet ist. Die Klapprichtung wird durch einen Pfeil 410 angedeutet.

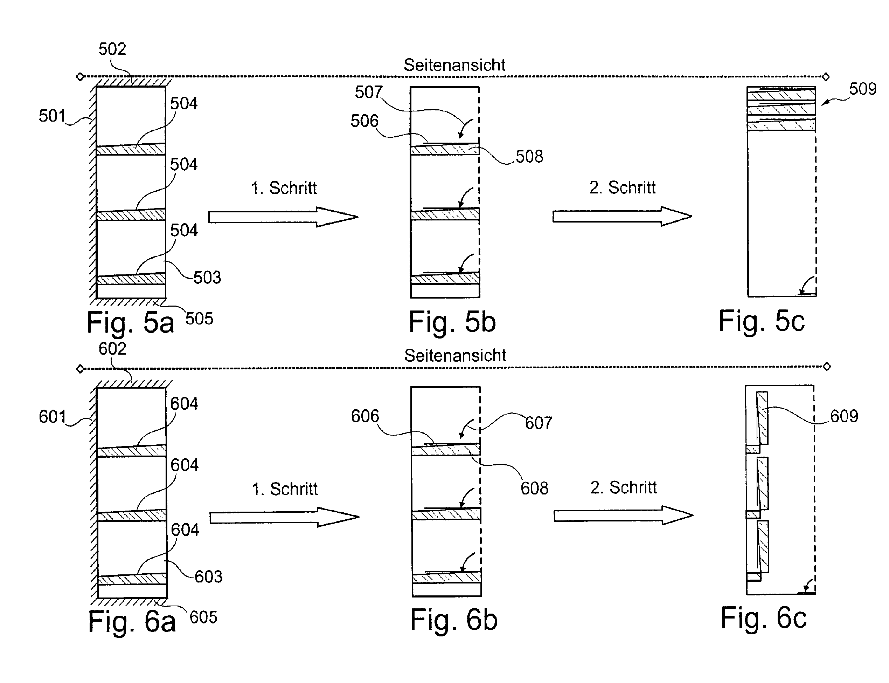

Fig. 5a zeigt in Seitenansicht ein Unit mit drei Betten 504. Ferner ist die Decke 502, die Rückseite 501 und der Boden 505 der Unit dargestellt, die allesamt mit der restlichen CRC verbunden sind. Außerdem zeigt die Fig. 5a das Frontpanel 503, wobei das Frontpanel in drei Teile gegliedert ist.

Fig. 5b zeigt wie Teile des Frontpanel 506 auf die Betten 508 geklappt werden können. Der Pfeil 507 deutet dabei die Klapprichtung an.

Fig. 5c zeigt die Unit, wobei die einzelnen Betten-Frontpanel- Einheiten 509 nach oben verschoben angeordnet sind.

Fig. 6a zeigt das Unit mit seiner Decke 602, seiner Rückseite 601 und seinem Boden 605, wobei alle diese Teile der Unit mit dem restlichen CRC verbunden sind. Ferner ist das Frontpanel 603 dargestellt sowie drei Betten 604

Fig. 6b zeigt, dass einzelne Teile des Frontpanels 606 auf die Betten 608 geklappt werden. Der Pfeil 607 stellt dabei die Klapprichtung dar.

Fig. 6c zeigt als weiteren Schritt, dass die Betten 609 zur Rückseite der Unit weggeklappt werden.

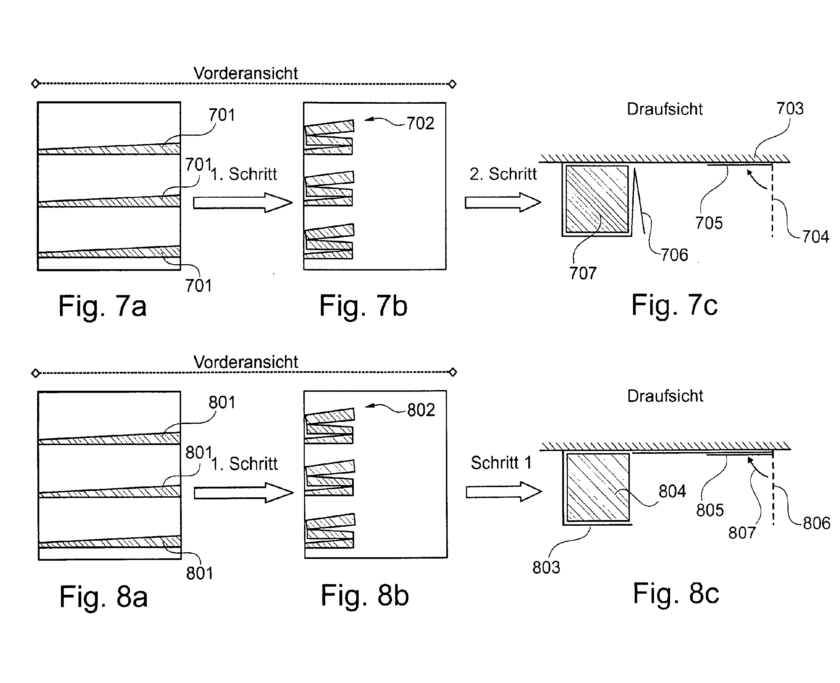

Fig. 7a zeigt die Vorderansicht einer Unit, die drei Betten 701 aufweist.

Fig. 7b zeigt, dass die Betten 702 in mehreren Abschnitten unterteilt sind, wodurch die Betten 702 zusammenklappbar ausgebildet sind.

Fig. 7c zeigt wie ein freistehendes Frontpanel 706 an die zusammengeklappten Betten 707 geschoben angeordnet ist und das Seitenteil 704, 705 nach innen zur Rückseite 703 der Unit geklappt ist.

Fig. 8a zeigt eine Unit mit drei Betten 801 in Vorderansicht.

Fig. 8b zeigt die drei Betten 802 zusammengeklappt.

Fig. 8c zeigt, dass das ein Teil des Frontpanel 803 an die zusammengeklappten Betten geschoben ist und dein zweiter Teil des Frontpaneels zur Rückwand der Unit verfahren ist. Die Seitenwand 805, 806 ist nach innen zur Rückseite der Unit hin geklappt. Dargestellt ist dabei die senkrecht von der Rückseite abstehende Seitenwand 806 und die zur Rückseite weggeklappte Seitenwand 805. Der Pfeil 807 zeigt dabei die Klapprichtung an. Die zusammengeklappten Betten sind mit dem Bezugszeichen 804 gekennzeichnet.

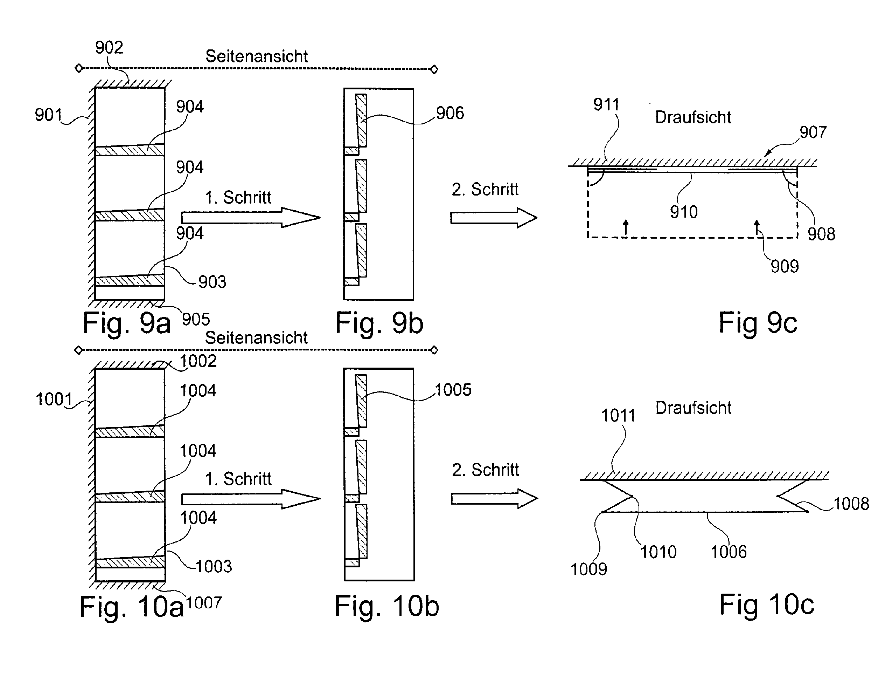

Fig. 9a zeigt eine Unit mit einer Decke 902, einer Rückseite 901 und einem Boden 905, wobei diese Teile mit der restlichen CRC verbunden sind. Ferner sind ein Frontpanel 903 sowie die Betten 904 dargestellt.

Fig. 9b zeigt wie die Betten 906 zur Rückseite der Unit nach oben weggeklappt angeordnet sind. Es wäre auch möglich die Betten nach unten oder zur Seite wegzuklappen.

Fig. 9c zeigt, dass die Seitenwände 911 nach innen geklappt sind und das Frontpanel 910 an die Seitenwände 911 heran geschoben ist. Der Pfeil 908 zeigt dabei die Klapprichtung der Seiten wände 911 und der Pfeil 909 zeigt die Verschieberichtung des Frontpanels 910 in Richtung der Rückseite 907.

Fig. 10a zeigt ein Unit mit einer Decke 1002, einer Rückseite 1001 und einem Boden 1007, wobei diese Teile der Unit mit der restlichen CRC verbunden sind.

Fig. 10b zeigt in Seitenansicht das Unit, wobei die Betten zur Rückseite der Unit weggeklappt sind.

Fig. 10c zeigt wie das Frontpanel 1006 zur Rückseite der Unit verschoben werden kann. Dies wird erreicht durch Gelenke 1009, 1010, 1011 innerhalb der Seitenwände 1008, die ein Zusammenfalten der Seitenwände 1008 ermöglichen.

Ein Beispiel eines CRC ist das UD-CCRC. Das DU-CCRC bietet ca. 4,1 m² freie Fläche ohne die Units. Nach dem Einklappen der Units 2, 4 und 5 beträgt die Fläche 6,9 m². Somit ist durch das Einklappen eine Vergrößerung des zur Verfügung stehenden Platzes von ca. 2,8 m² erzielt worden.

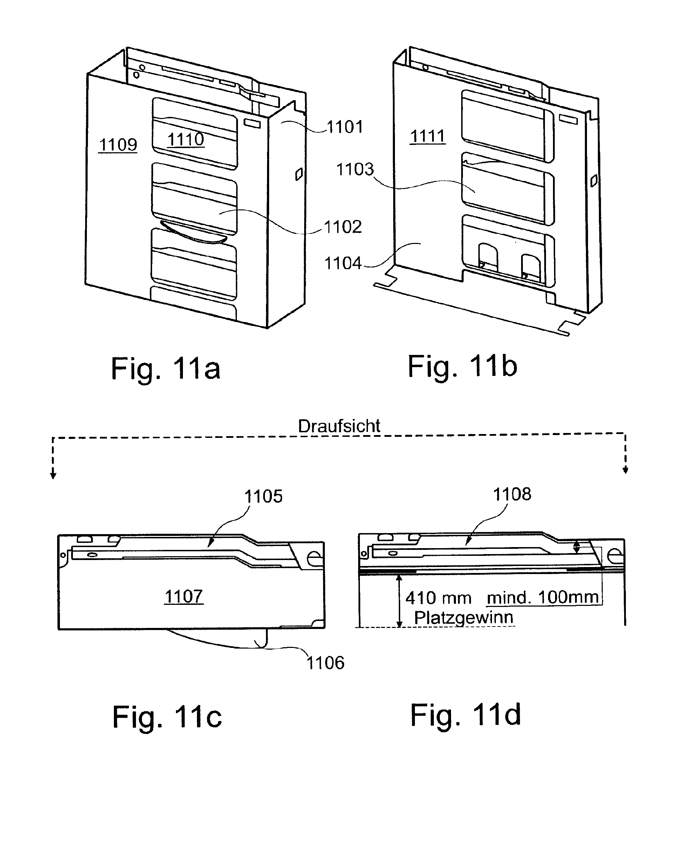

Fig. 11 a zeigt eine Unit mit drei Betten 1110. Ferner dargestellt ist das Frontpanel 1109 der Unit sowie die Seitenwand 1101 der Unit und die Aussparungen 1102 des Frontpanels 1109, damit die Betten 1110 zugänglich sind.

Fig. 11b zeigt das Frontpanel 1111 mit Aussparungen 1103, wobei das Frontpanel 1111 in Richtung Rückseite der Unit versetzt ist.

Fig. 11c zeigt die Unit der Fig. 11a in einer Draufsicht. Im Bereich 1107 sind die Betten angeordnet, im Bereich 1105 sind z.B. die Verteilerrohre der Klimaanlage anzutreffen. Ferner ist eine Ablagemöglichkeit 1106 dargestellt, die wegklappbar ausgebildet sein kann.

Fig. 11d zeigt dieselbe Unit wie in Fig. 11 a und Fig. 11b allerdings fehlt in dieser Situation der Bereich 1107. Dieser ist fast vollständig weggefallen, wodurch sich ein freier Raum ergibt. Die Versorgungsrohre der Klimaanlage hingegen können nicht weggeklappt oder entfernt werden, daher ist nach wie vor ein großer Bereich 1108 zur Aufnahme der Versorgungsleitungen vorhanden.

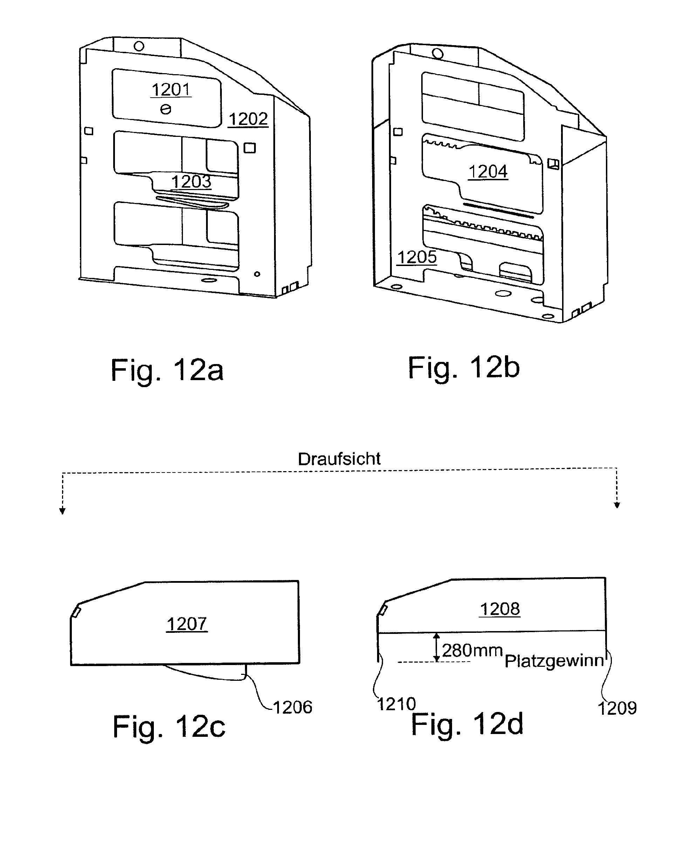

Fig. 12a zeigt eine weitere Unit, die Betten 1201, 1203 aufweist. Das Bett 1201 ist nur zur optionalen Benutzung vorgesehen und kann daher (wie in der Zeichnung dargestellt) verschlossen werden. Die Unit weist ferner das Frontpanel 1202 auf.

Fig. 12b zeigt dieselbe Unit mit den drei Betten 1204, wobei nun das Frontpanel 1205 in Richtung der Rückseite der Unit versetzt ist.

Fig. 12c zeigt in Draufsicht die Unit der Fig. 12a, wobei deutlich wird, dass die Unit 1207 eine gewisse Breite aufweist und weit in den Innenbereich der CRC hineinragt.

Ferner ist eine Ablagemöglichkeit 1206 dargestellt, die nach innen in die Unit 1207 oder seitlich an die Unit 1207 angeklappt werden kann.

Fig. 12d zeigt in Draufsicht die Unit der Fig. 12b, wobei die Unit 1208 eine geringere Breite aufweist im Vergleich zur Situation der Fig. 12a und Fig. 12c. Hierdurch ergibt sich ein größerer freier Raum innerhalb der CRC. Fig. 12d zeigt die Seitenwände 1209 und 1210, die nötigenfalls weggeklappt, verschoben oder versetzt werden können.

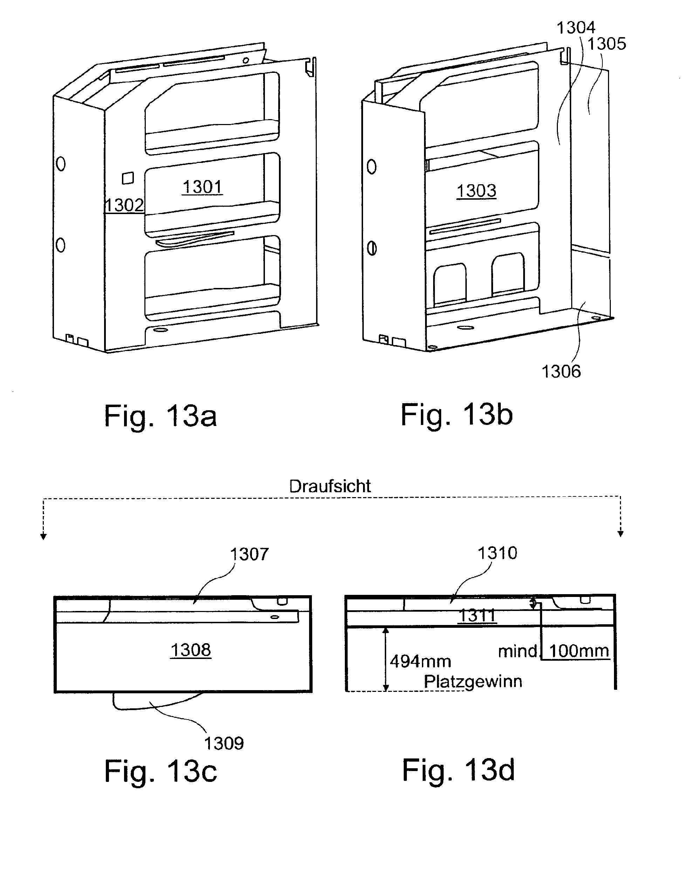

Fig. 13a zeigt eine Unit mit drei Betten 1301, die hinter einem Frontpanel 1302 angeordnet sind.

Fig. 13b zeigt dieselbe Unit mit den Betten 1303, wobei das Frontpanel 1304 zur Rückseite der Unit hin versetzt angeordnet ist. Durch das Verschieben des Frontpanels 1304 ergibt sich mehr freier Raum innerhalb des CRC. Die Seitenwände 1305, 1306 stehen nach Versetzung des Frontpanels 1304 hervor und können im Bedarfsfalle weggeklappt, versetzt oder entfernt werden.

Der Raumgewinn ist anhand der beiden Figuren 13c und 13d deutlich erkennbar. Fig. 13c zeigt die "ausgefahrene" Unit mit einem Bereich 1308, der für die Betten vorgesehen ist. Ferner ist noch eine Ablagemöglichkeit 1309 und die Versorgungskanäle 1307 dargestellt.

Fig. 13d stellt die Situation dar, nachdem ein größtmöglicher freier Raum in der CRC geschaffen wurde. Der Bereich 1308 der Fig. 13c ist auf den Bereich 1311 der Fig. 13d reduziert worden, der deutlich kleiner ausfällt. Die Versorgungskanäle 1311 jedoch sind nahezu unverändert in ihrem Raumbedarf. Ferner sind die Versorgungskanäle 1307, 1310 dargestellt, die kaum in ihrem Platzbedarf reduziert werden können.

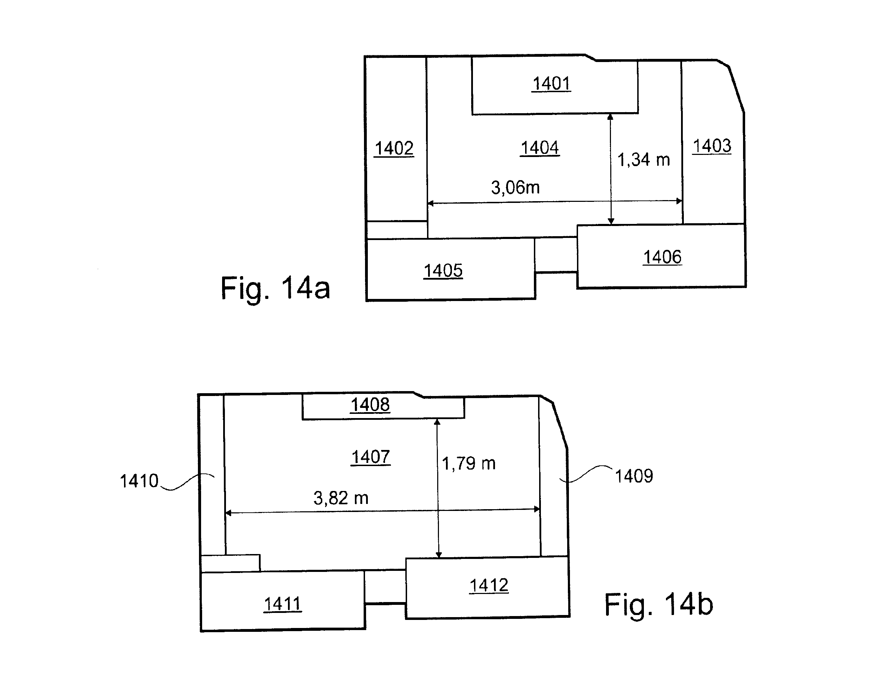

Fig. 14a zeigt in einer Aufsicht ein CRC, das zur Benutzung für die Flugzeugmannschaft bereit steht. Alle Units 1401, 1402, 1403, 1405 und 1406 sind "ausgefahren" und benutzbar zum Ausruhen bzw. Schlafen für die Crew-Mitglieder.

Die Fig. 14b zeigt das CRC mit in ihrem Raumbedarf reduzierten Units 1408, 1409, 1410. Die Units 1411 und 1412 bleiben unverändert, da diese Units in einer Schräge eingebaut sind und daher eine analoge Reduzierung des Raumbedarfs zu einer Raumerweiterung führen würde, die nicht sinnvoll genutzt werden kann, da an diesen Stellen keine ausreichende lichte Höhe erzielt werden kann. In diesen Bereichen müssten Passagiere daher stets gebückt stehen bzw. sitzen, was kein adäquater Komfort darstellt.

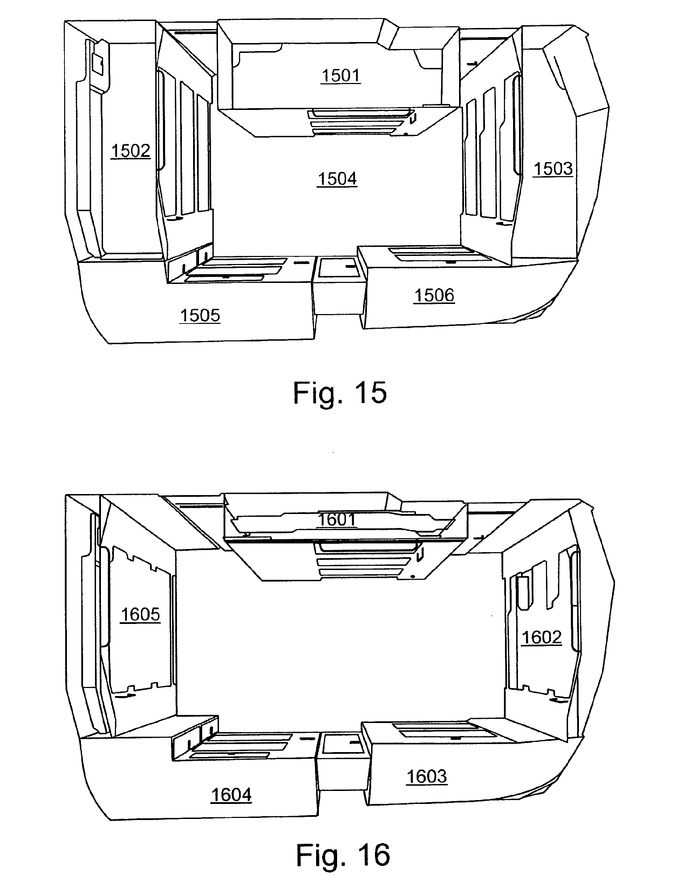

Fig. 15 zeigt in einer perspektivischen Sicht von oben das CRC mit den Units 1501, 1502, 1503, 1505 und 1506. Im inneren Bereich des CRC ist ein freier Raum vorhanden, der allerdings aufgrund der Units relativ eng ausfallen kann.

Fig. 16 zeigt in einer perspektivischen Sicht von oben das CRC, wobei die Units 1601, 1602 und 1605 durch Umrüsten einen deutlich geringeren Raumbedarf aufweisen im Vergleich zur Situation gemäß der Fig. 15. Die Units 1603 und 1604 bleiben unverändert, da hier kein sinnvoller Raumgewinn möglich ist, wegen einer Dachschräge im Bereich dieser Units 1603, 1604.

Ein freigeräumtes CRC kann grundsätzlich für die verschiedensten Anwendungen genutzt werden. Um geschäftlichen Bedürfnissen zu genügen könnte das CRC z. B. umgerüstet werden als Meeting-, Seminar- oder Konferenzraum. Hierzu sollte das CRC z.B. einen Computer, Telefon, Telefax und Internetanschlüsse sowie Arbeitstische enthalten.

Das CRC könnte außerdem ausgerüstet werden, um Glücksspiele zu veranstalten, wie z.B. Poker, Roulette, etc. Das CRC könnte einen Flipper oder Slot machines beherbergen.

Das CRC könnte als Wellness-Bereich ausgebildet sein und eine Sauna, einen Whirlpool, Duschen, einen Friseursalon, ein Solarium, einen Ruheraum oder einen Klangraum aufweisen. Ferner könnte in einem Wellness-Bereich den Fluggästen Massage, Maniküre, Pediküre, Kosmetikanwendungen oder Yoga angeboten werden.

Das CRC könnte zur sportlichen Betätigung der Fluggäste vorbereitet werden, wobei Fitnessübungen, Tanzen, Kampfkunsttraining, Rudern, Baseball, Golfen, Fahrradfahren oder Kartfahren angeboten werden könnten. Ferner könnte in einem umgerüsteten CRC Videospiele wie z.B. interaktive Videospiele angeboten werden.

Als weitere alternative Nutzung wäre ein Einrichten einer Bar in einer CRC denkbar, wodurch den Gästen ein geselliger Musikgenuss, z.B. auch Karaoke, bzw. allgemein Möglichkeiten zum Feiern oder zur Kommunikation eröffnet werden könnten.

Das CRC könnte ferner zur Kinderbetreuung genutzt werden, wodurch die Kinder die Möglichkeit hätten z.B. Brettspiele zu spielen.

Es gibt unzählige weitere Möglichkeiten ein freigeräumtes CRC für interessante oder unterhaltsame Verwendungen für die Fluggäste einzusetzen, als weitere Beispiele können erwähnt werden: Feng Shui-Anwendungen, religiöse Veranstaltungen, Möglichkeiten zum Schwimmen, Waschmöglichkeiten, Bügelservice, zum Lesen oder ganz allgemein zum Informieren.

Eine Ausführungsform der Erfindung ist die Verwendung als Massage- und Ruheraum. Hier können sich die Passagiere ausruhen und entspannen, indem sie sich massieren lassen. Die Massage wird von beruhigenden Klängen begleitet, somit kann der Alltagsstress leicht vergessen werden. Es wird eine Ganzkörpermassage und eine Teilkörpermassage angeboten. Bei der Teilkörpermassage kann zwischen einer Waden-, Rücken- oder Nackenmassage gewählt werden. Die Massage dient nicht nur zur Entspannung, sondern hat auch noch den zusätzlichen Effekt durchblutungsfördernd zu wirken. In Höhen von ca. 10.000 km ist der menschliche Körper viel höheren Kräften ausgesetzt. Durch wenig Bewegung, da die größte Anteil der Flugzeit im Sitzen verbracht wird, kommt es zur mangelhaften Durchblutung. Diese mangelhafte Durchblutung kann im äußersten Fall zur Thrombose führen kann. Die Massage ist somit nicht nur entspannend, sondern auch gesundheitsfördernd.

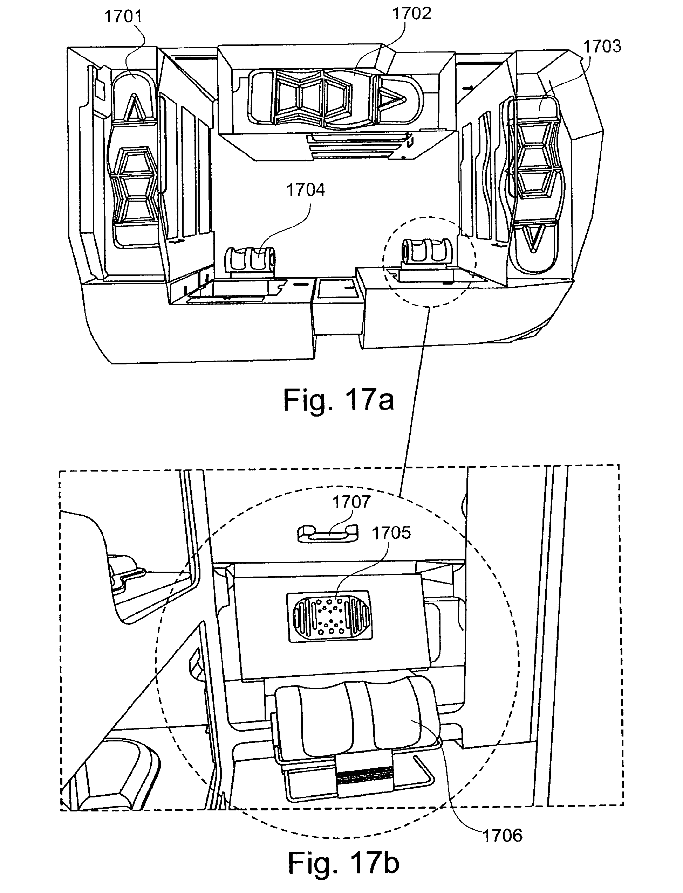

Fig. 17a zeigt ein CRC, das als Massage- und Ruheraum umgerüstet ist. Die Units 1701, 1702 und 1703 sind dabei nicht verändert. Stattdessen wurden die Betten der Units 1701, 1702, 1703 mit Auflagen (Massagematten) versehen, die eine Massagemöglichkeit bereit stellen. Ferner ist das CRC mit einem Wadenmassagegerät 1704 ausgerüstet.

Fig. 17b zeigt die Anordnung eines Wadenmassagegeräts 1706 und eines Rückenmassagegeräts 1705. Ferner ist ein Massagegerät für den Nacken angeordnet. Diese Geräte sind dabei so angeordnet, class z.B. die unteren Betten der Units als Sitzgelegenheit genutzt werden können.

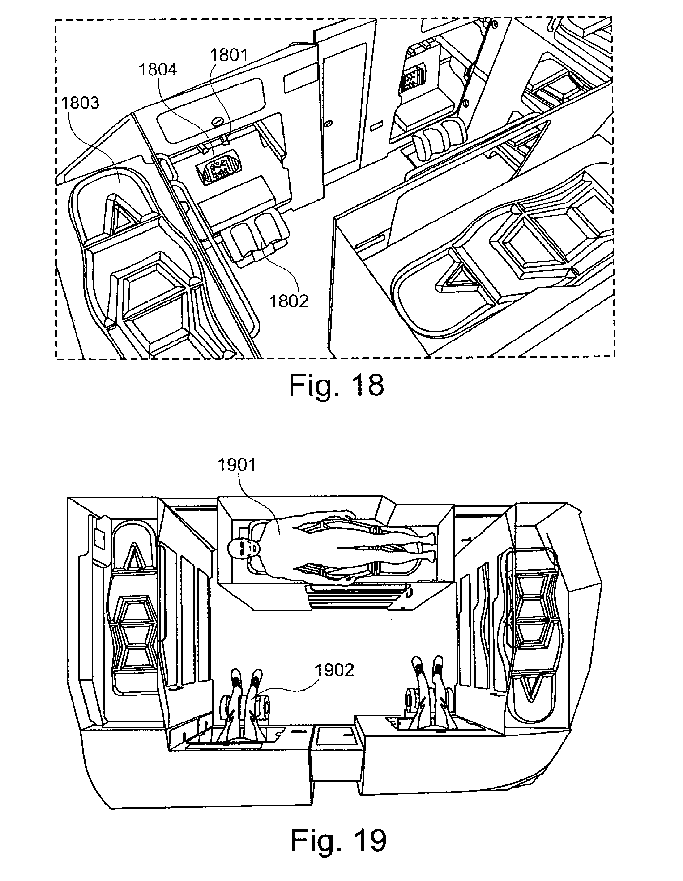

Die Fig. 18 zeigt der Massage- und Ruheraum mit einem Rückenmassagegerät 1801, einem Wadenmassagegerät 1802, einer Massagematte 1803 und einem Massagegerät für den Nacken 1804.

Fig. 19 zeigt der Massage- und Ruheraum, wobei skizzenhaft die Verwendung durch Menschen dargestellt ist. Im obersten Bett der Unit 1901 ist beispielsweise ein Körper dargestellt, der auf einer Massagematte aufliegt. Ein weiterer Körper ist dargestellt, der die Verwendung und die Sitzmöglichkeit in der Nähe eines Wadenmassagegeräts 1902 darstellt.

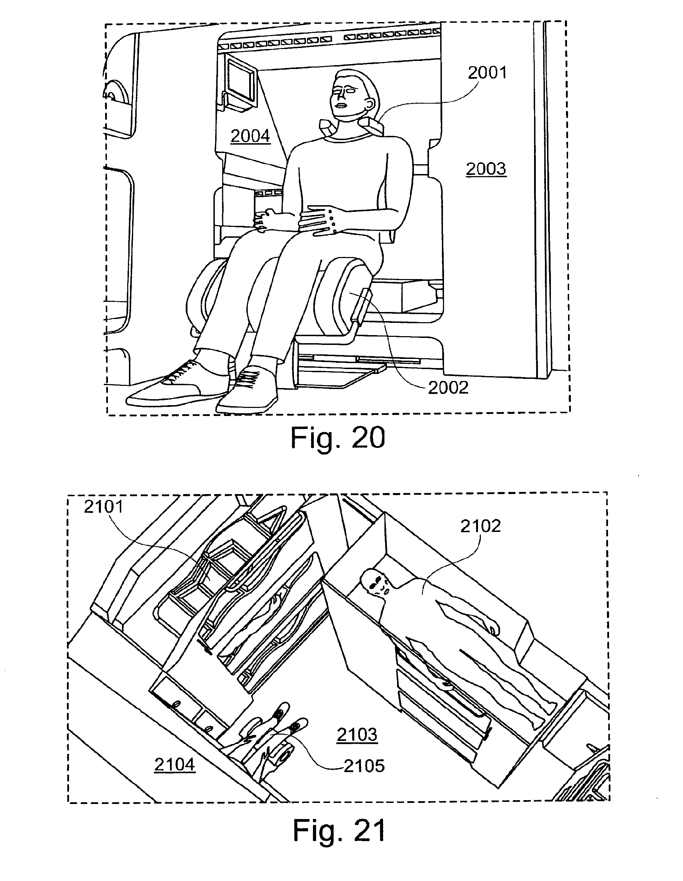

Fig. 20 zeigt einen Körper, der die Sitzhaltung im Massagebereich darstellt. Der Körper sitzt dabei innerhalb einer Ausbuchtung 2004 eines Units, die durch das Freiräume von Betten entsteht. Der Körper wird von einem Wadenmassagegerät 2002 und einem Nackenmassagegerät 2001 massiert. Das Frontpanel 2003 der Unit bleibt bei dieser Verwendung unverändert.

Fig. 21 zeigt einen Ausschnitt des Massage- und Ruheraums in einer perspektivischen Aufsicht, wobei die Massagematten 2101, 2102 und ein Wadenmassagegerät 2105 deutlich erkennbar sind. Der Passagier dessen Waden massiert werden, kann in der Unit 2104 Platz nehmen. Der freie Raum 2103 des CRC ist im Vergleich zur Verwendung als Ruheraum für die Crew unverändert.

Eine weitere Ausführungsform der Erfindung ist die Verwendung als Konferenzraum. Das CRC bietet dem Geschäftsreisenden Platz für Teambesprechungen oder Konferenzen. Ferner kann die Möglichkeit vorgesehen werden über eine Videoübertragung mit einem Kunden verbunden zu werden.

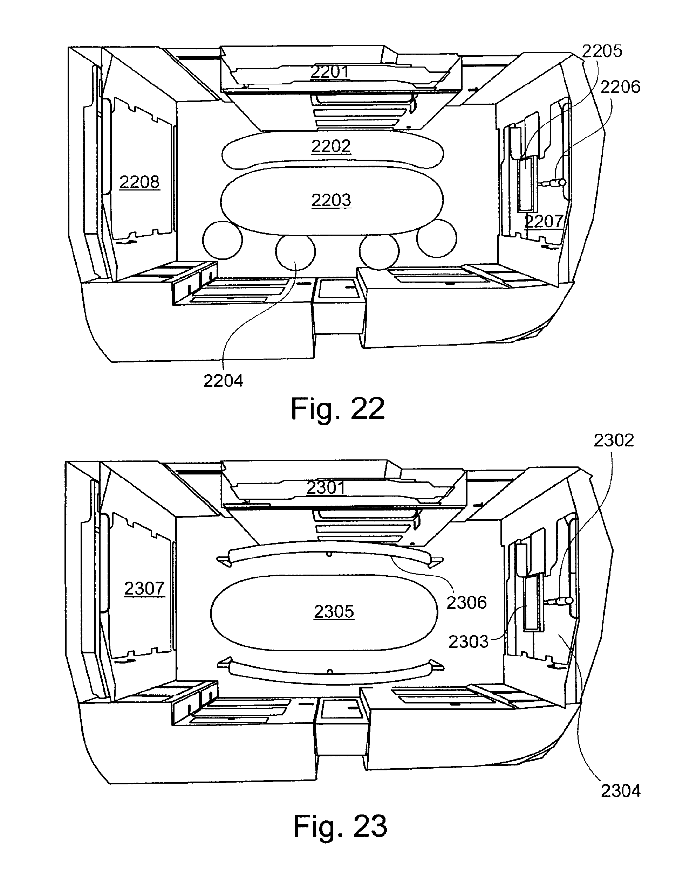

Fig. 22 zeigt die Verwendung eines CRC als Konferenzraum. Hierzu sind Sitzhocker 2204, eine Sitzbank 2202 und ein Konferenztisch 2203 im CRC angeordnet. Die Units 2201, 2207 und 2208 sind in ihrem Raumbedarf reduziert ausgestaltet, um einen möglichst geräumigen Konferenzraum zu erhalten. Der Konferenzraum umfasst ferner einen Monitor 2205, der an einem Teleskoparm 2206 angeordnet ist. Aufgrund des Teleskoparms 2206 kann der Monitor nach Gebrauch weggefahren werden, um das CRC wieder für die Benutzung durch die Crew vorzubereiten.

Fig. 23 zeigt das CRC als Konferenzraum, wobei im CRC ein Konferenztisch 2305, zwei Stehhilfen 2306 und ein Monitor 2303 mit einem Teleskoparm 2302 vorhanden sind. Die Units 2301, 2304 und 2307 sind in platzsparender Weise angeordnet.

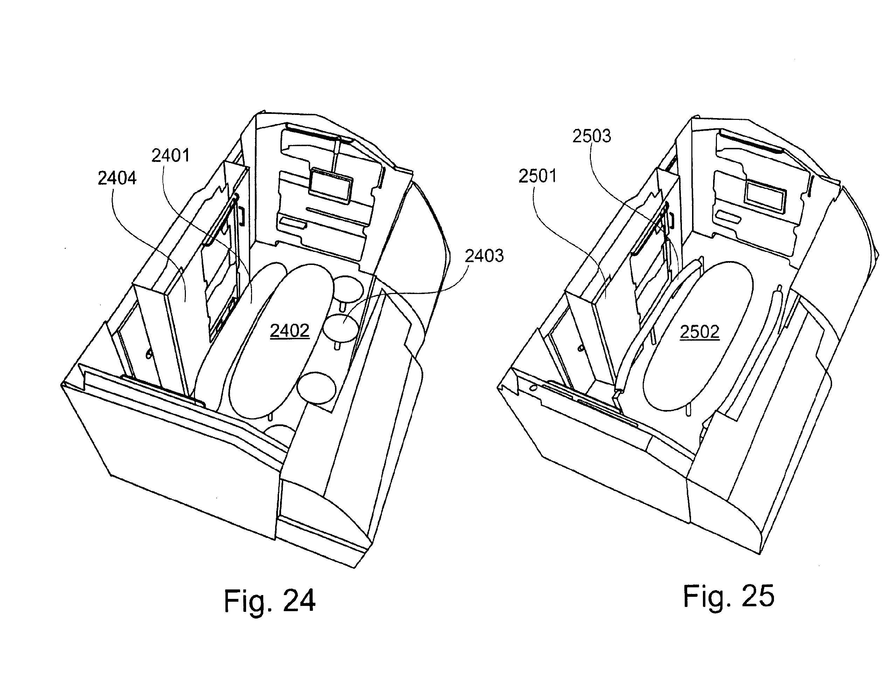

Fig. 24 zeigt den Konferenzraum mit einem Konferenztisch 2402, einer Sitzbank 2401, Sitzhocker 2403 und einer Unit 2404 in perspektivischer Sicht von oben.

Fig. 25 zeigt den Konferenzraum in perspektivischer Sicht von oben mit einem Konferenztisch 2502, zwei Stehhilfen 2503. Die Unit 2501 ist dabei zusammengeklappt dargestellt.

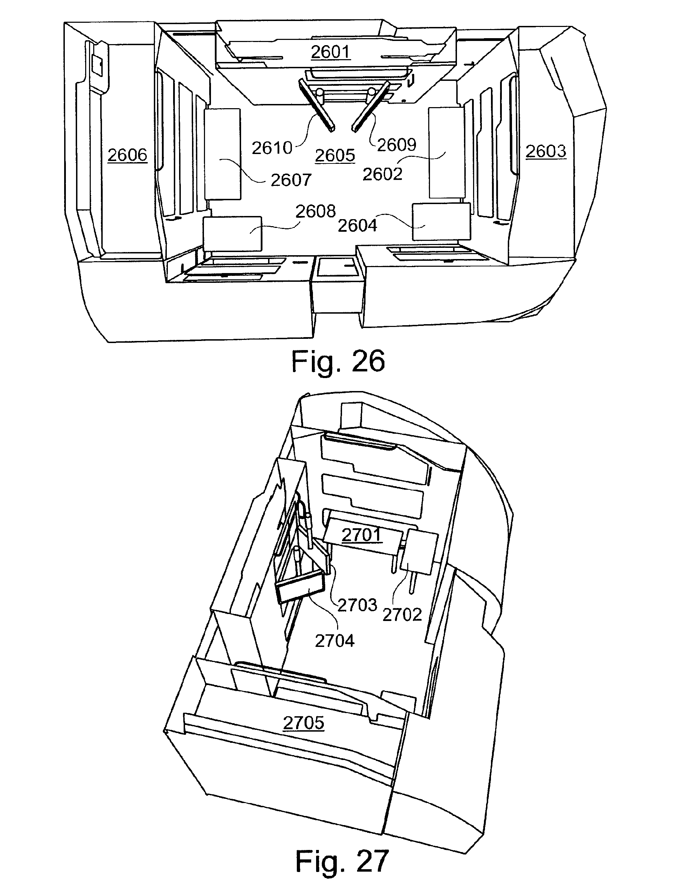

Fig. 26 zeigt das CRC mit einem zusammengeklappten Unit 2601 und den Units 2606 und 2603. Die Units 2606 und 2603 dienen hierbei als Sitzgelegenheiten und sind nicht zusammengeklappt. Das CRC enthält Tische 2607, 2608, 2602 und 2604. Fluggäste können in den Units Platz nehmen und sich mittels Monitoren 2610 und 2609 unterhalten oder informieren lassen. Der freie Raum 2605 des CRC ist im Vergleich zur Nutzung als Ruheraum der Mannschaft ungefähr gleich groß (es wurde nur die Unit 2601 zusammengeklappt, um Platz für die Monitore 2610 und 2609 zu schaffen).

Fig. 27 zeigt denselben Raum in einer perspektivischen Sicht von oben. Das Unit 2705 wird als Sitzgelegenheit genutzt. Das CRC enthält einen Tisch 2701, 2702 sowie Monitore 2704 und 2703.

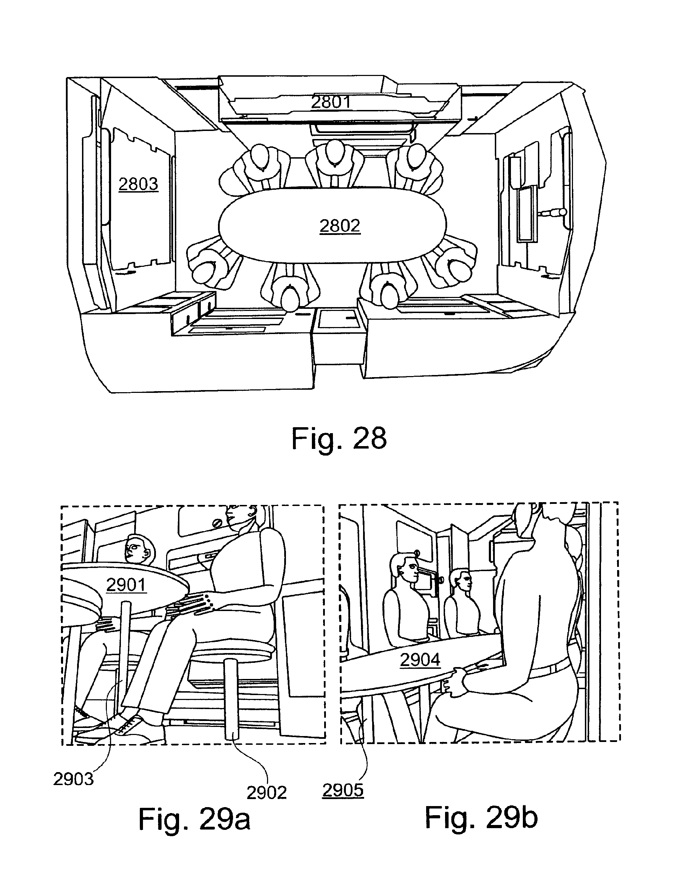

Fig. 28 zeigt den Konferenzraum in einer Darstellung mit schematisch dargestellten Körpern. Das CRC weist einen Konferenztisch 2802 und Sitzgelegenheiten auf. Ferner ist dargestellt, dass die Units 2801, 2803 und 3002 zusammengeklappt sind, um freien Raum zu schaffen.

Fig. 29a zeigt in Froschperspektive denselben Raum, wobei die Tischbeine 2903 des Tisches 2901 und das Bein 2902 des Hockers dargestellt sind. Die Tischbeine 2903 und das Bein des Hockers 2902 können teleskopartig ausgebildet sein, wodurch der Konferenztisch und die Hocker nach Gebrauch in Richtung Boden des CRC verfahren werden können. Hierdurch kann das Rückrüsten auf eine Benutzungsmöglichkeit durch die Crew erleichtert werden.

Fig. 29b zeigt den Konferenztisch mit einem Tischbein 2905, der teleskopartig ausgebildet sein kann.

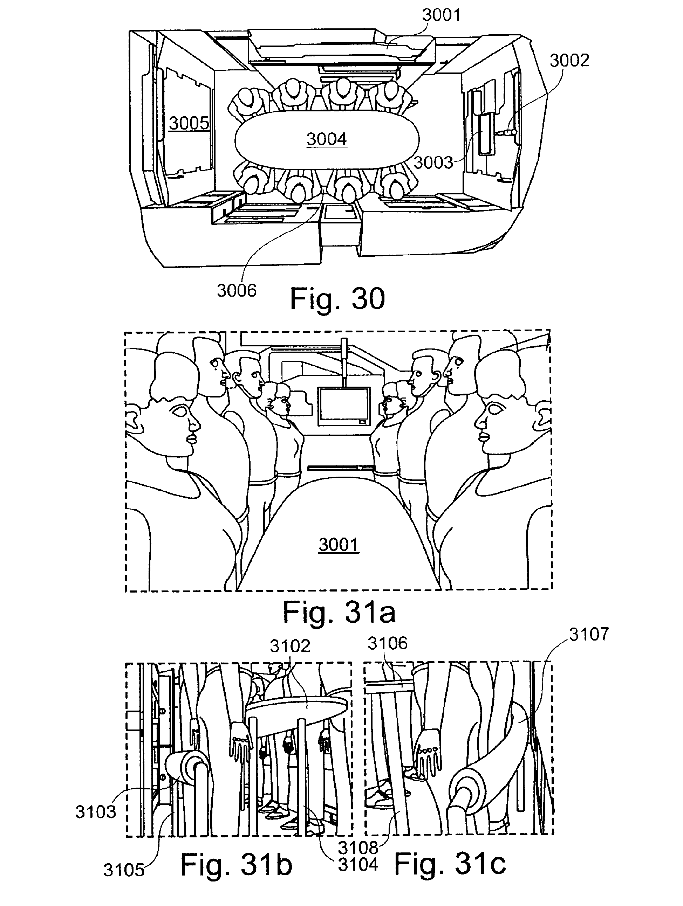

Fig. 30 zeigt den Konferenzraum mit einem Konferenztisch 3004, Stehhilfe 3006 und einem Monitor 3003, der an einem Teleskoparm 3002 befestigt ist. Die Units 3005, 3001 und 3002 sind zusammengeklappt.

Fig. 31a zeigt den Konferenzraum in einer weiteren Perspektive entlang des Konferenztisches 3101.

Fig. 31b zeigt in einer Froschperspektive den Konferenzraum mit einer Stehhilfe 3103 und einem Tisch 3102 und einem Tischbein 3104. Das Tischbein kann teleskopartig ausgebildet sein, um eine Versenkbarkeit des Konferenztisches 3102 nach Gebrauch zu ermöglichen. Die Stehhilfe 3103 ist an Säulen 3105 befestigt, die teleskopartig ausgebildet sein können, wodurch eine Versenkbarkeit gewährleistet werden kann.

Fig. 31c zeigt in einer weiteren Froschperspektive die Stehhilfe 3107 und den Konferenztisch 3106 mit einem Tischbein 3108.

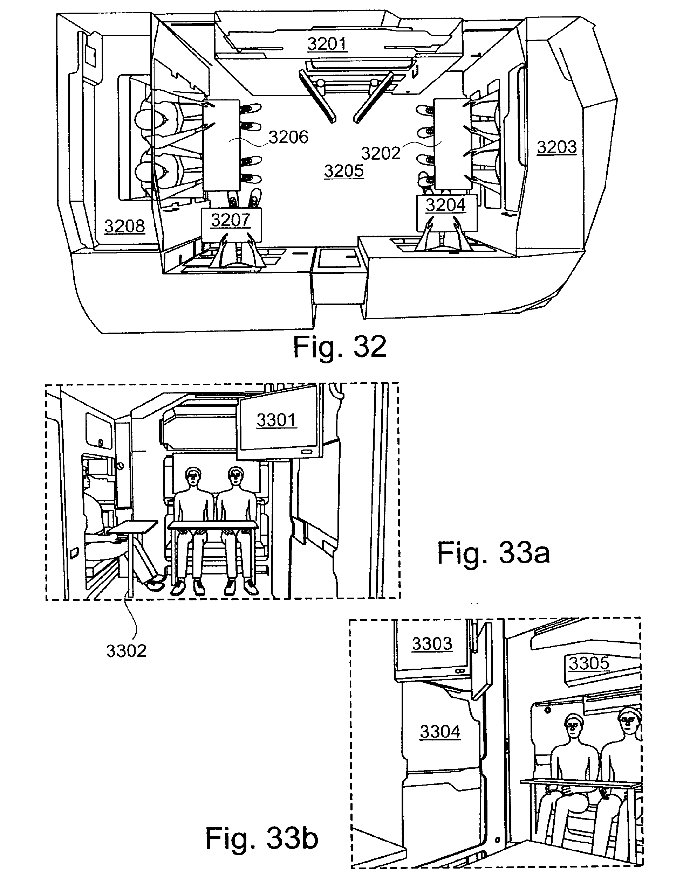

Fig. 32 zeigt das CRC umgerüstet als Unterhaltungsraum z.B. für Kinoveranstaltungen oder als Meeting- bzw. Konferenzraum. Die Passagiere sitzen dabei an Tischen 3206, 3207, 3204 und 3202 innerhalb von Units 3208, 3203. Der freien Raum 3205 des CRC wurde nur durch das Zusammenklappen der Unit 3201 vergrößert, um Platz für Monitore zu schaffen. Auch kann eine Leinwand angebracht sein.

Fig. 33a zeigt eine perspektivische Ansicht des CRC mit einem Monitor 3301 und Tischen mit Tischbeinen 3302, wobei die Tischbeine teleskopartig ausgebildet sein können.

Fig. 33b zeigt eine weitere perspektivische Ansicht mit zusammengeklappter Unit 3304, um Platz für Monitore 3303 zu schaffen. Das Frontpanel 3305 eines weiteren Units ist nicht versetzt, damit die Passagiere in der entsprechende Unit Sitzmöglichkeiten wahr nehmen können.

Eine weitere Ausführungsform der Erfindung stellt die Verwendung des CRC als Aufenthaltsraum für Passagiere dar, wobei die Möglichkeit geboten wird, sich mit Glücksspielen die Zeit zu vertreiben. Auf einem Spieletisch können durch unterschiedliche Tischauflagen Poker, Roulette oder Black Jack gespielt werden. Ferner können Slot Maschinen vorgesehen sein, die dem Spieler verschiedene Spiele zur Auswahl anbieten können. Dieses Konzept würde den Airlines eine zusätzliche Einnahmequelle bieten.

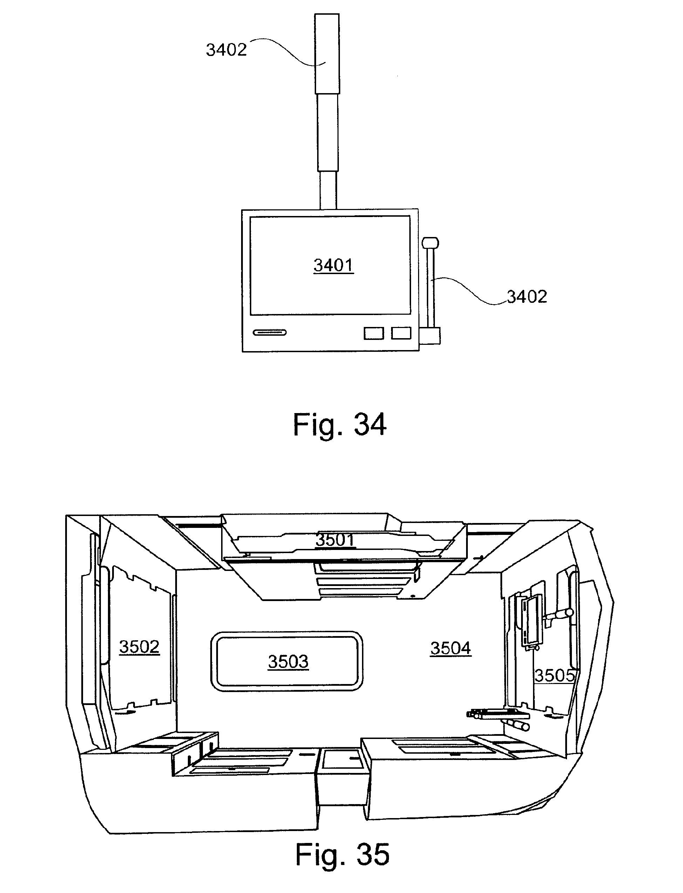

Fig. 34 zeigt eine Slot machine 3401 mit einem Hebel 3402 und einem teleskopartigen Arm 3402. Mittels des teleskopartigen Arms 3402 kann die Slot machine nach Gebrauch verfahren werden, um Raum für die Crew zu schaffen.

Fig. 35 zeigt das CRC in einer Verwendung, um den Passagieren das Spielen von Glücksspielen zu ermöglichen. Das CRC weist dazu einen universellen Spieltisch 3503 auf. Die Units 3501, 3502 und 3505 sind platzsparend ausgebildet, wodurch der freie Raum 3504 vergrößert wird.

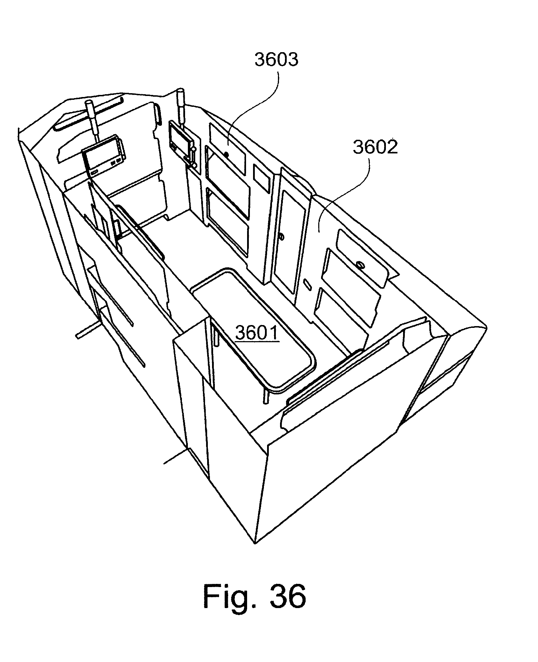

Fig. 36 zeigt denselben Raum in einer perspektivischen Sicht von oben mit dem universellen Spieletisch 3601. Die Units 3603 und 3602 sind platzsparend zusammengeklappt.

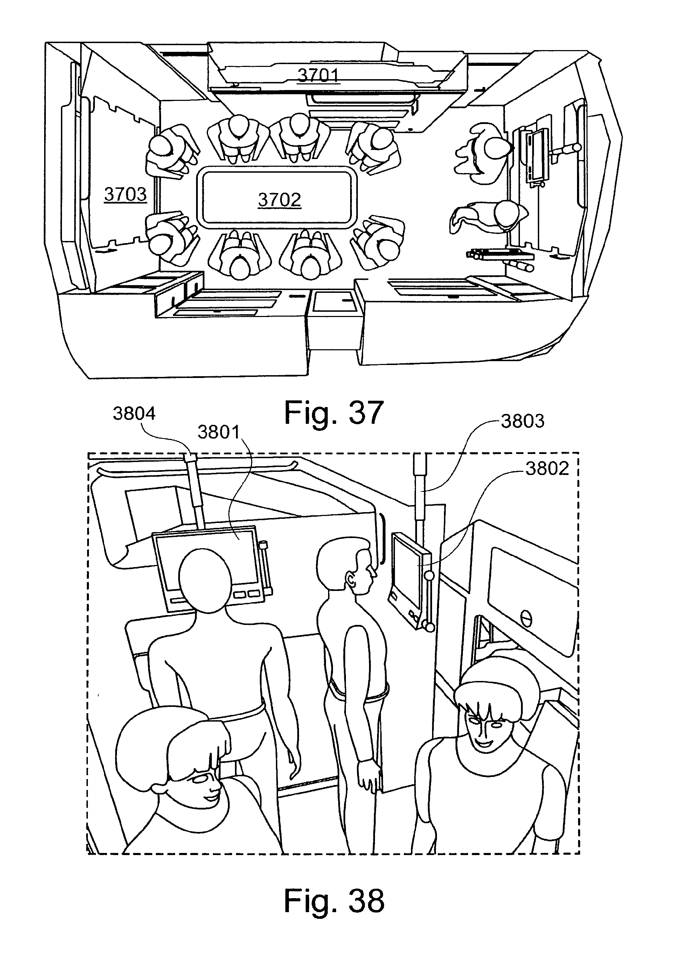

Fig. 37 zeigt den Spieleraum mit einer Darstellung mit schematischen Körpern, um eine Vorstellung von den räumlichen Verhältnissen zu erhalten. Im Zentrum des Raums ist ein universeller Spieletisch 3702. Die Units 3701 und 3703 sind zusammengeklappt.

Fig. 38 zeigt eine perspektivische Sicht desselben Raums mit zwei Slot machines 3801 und 3802, die an teleskopartigen Armen 3804 und 3803 befestigt sind.

Eine weitere Ausführungsform der Erfindung ermöglicht dem Passagier sportliche Betätigungsmöglichkeiten im CRC wahr zu nehmen. Hierzu können Laufbänder und Fahrräder oder z.B. auch ein interaktives Videospiel eingesetzt werden.

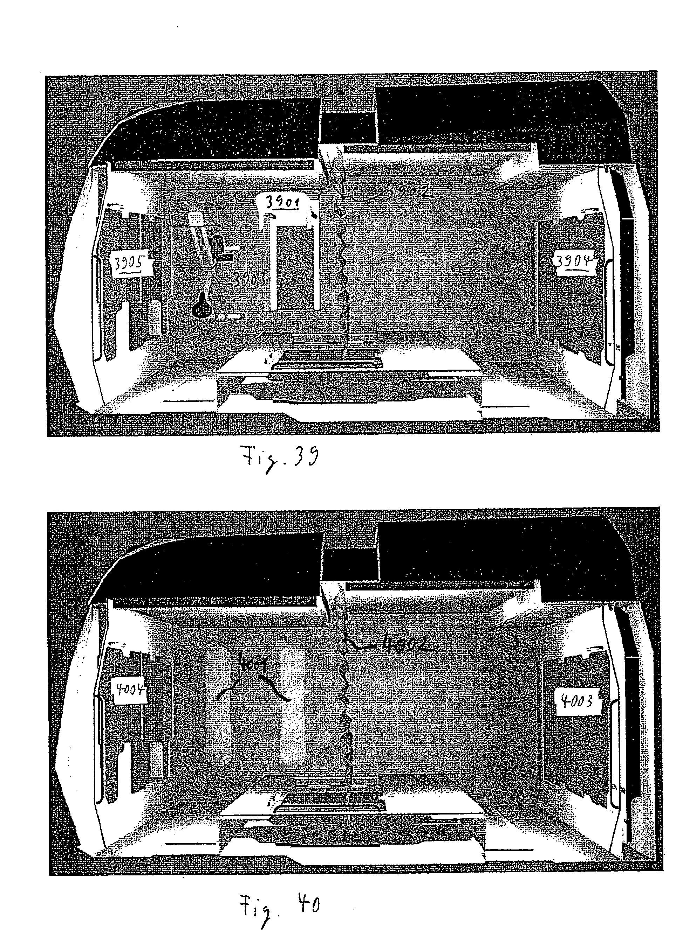

Fig. 39 zeigt ein CRC, das als Fitnessstudio mit einem Laufband 3901 und einem Fahrrad 3903 umgerüstet ist. Die Units 3905 und 3904 sind zusammengeklappt, wodurch der freie Raum im CRC vergrößert wurde. Dieser Raum wird mittels einem Vorhang 3902 als Raumteiler geteilt, um eine optimale Ausnutzung des Raums zu ermöglichen. Weiterhin können ausrollbare Leinwände vorgesehen sein, die für die Darstellung der interaktiven Videospielen und für die Darstellung von Videos/Filmen bei verschiedenen Aktivitäten dienen.

Fig. 40 zeigt das CRC als Fitnessstudio mit zwei Snowboards 4001. Der freie Raum, der durch das Zusammenklappen der Units 4004 und 4003 vergrößert wurde, wird mit einem Vorhang 4002 als Raumteiler geteilt.

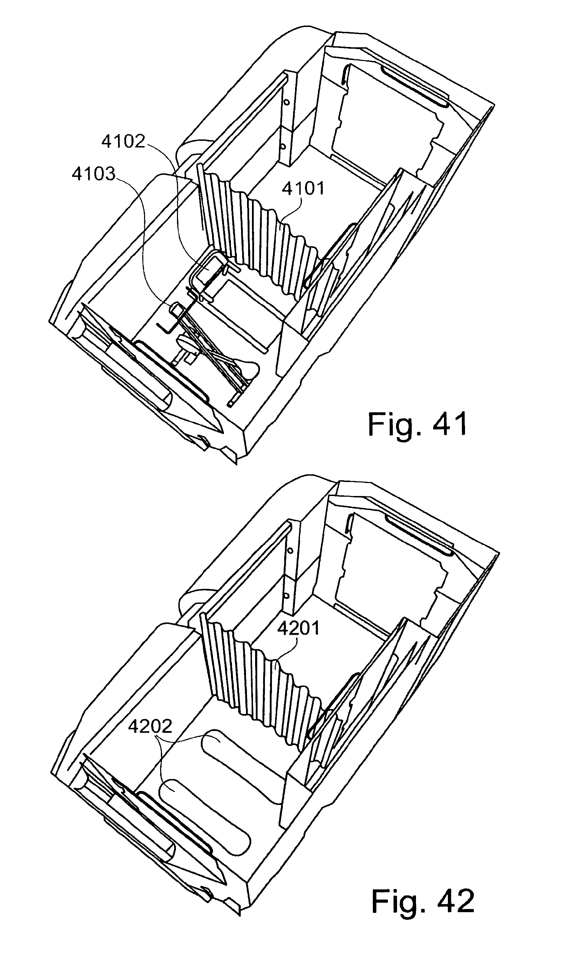

Fig. 41 zeigt in perspektivischer Sicht das CRC als Fitnessstudio von oben mit dem Laufband 4102, dem Fahrrad 4103 und dem Vorhang 4101 als Raumteiler.

Fig. 42 zeigt in perspektivischer Sicht von oben das CRC mit zwei Snowboards 4202 und dem Vorhang 4201 als Raumteiler.

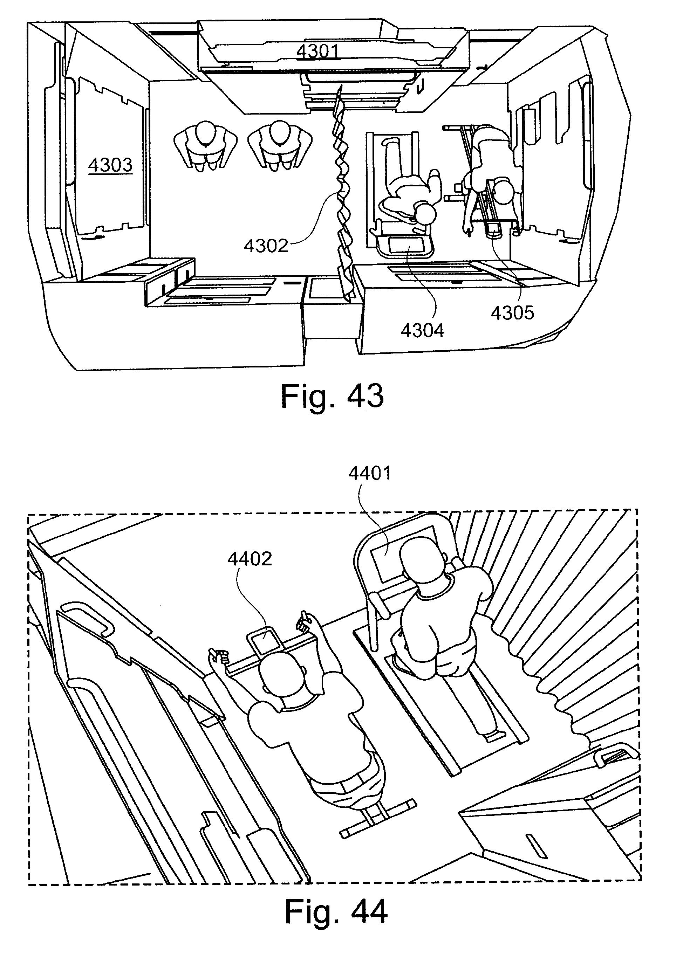

Fig. 43 zeigt in einer perspektivischen Sicht von oben das CRC mit den zusammengeklappten Units 4301 und 4303. Dem Passagier können hierbei zur sportlichen Betätigung ein Laufband 4304 und ein Fahrrad 4305 zur Verfügung gestellt werden. Ferner kann ein zweiter Bereich des CRC durch einen Vorhang 4302 als Raumteiler separiert werden, in dem elektronisch simulierte Spiele z.B. in Form eines interaktiven Videospiels gespielt werden können.

Fig. 44 zeigt von oben einen Teil des CRC mit einem Laufband 4401 und einem Fahrrad 4402.

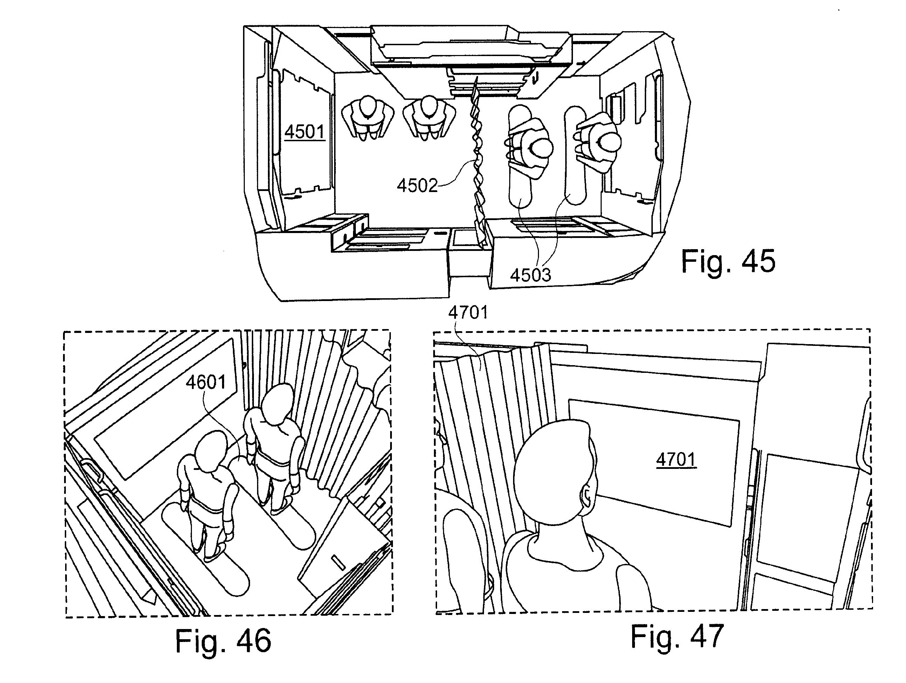

Fig. 45 zeigt ein CRC, das als Fitnessstudio ausgerüstet ist, mit zusammengeklappten Units 4501, einem Vorhang 4502 und zwei Snowboards 4503.

Fig. 46 zeigt einen Teil des CRC von oben mit zwei Snowboards 4601.

Fig. 47 zeigt einen zweiten Teil des CRC von oben, wobei der Bereich dargestellt ist in dem elektronisch animierte Spiele gespielt werden können. Die Wand 4702 kann dabei z.B. dazu genutzt werden ein Spielgeschehen, das von einem Projektor erzeugt wird, darzustellen. Der Raum ist durch einen Vorhang 4701 vom restlichen CRC abgetrennt.

Die zusätzliche Ausstattung, die für die Mehrfachnutzung benötigt wird, muss im Flugzeug für die Zeit platzsparend verstaut werden, in der sie nicht benötigt wird. Tische können daher mit Klappfüßen ausgestattet werden. Ferner können die Tische innerhalb des Boden verstaubar ausgebildet sein. Monitore und Slot Maschinen können über einen Teleskoparm an der Decke befestigt werden, wodurch sie nötigenfalls von der Decke nach unten geklappt werden können. Kleinere Gegenstände wie die Tischauflagen fürs Pokern, Rücken- und Nackenmassagegeräte, Massagematten können in den Staufächern innerhalb der Units untergebracht werden. Bei Laufbändern kann die Lauffläche im Boden integriert ausgebildet werden.

Bei allen Konzepten mit der Mehrfachnutzung muss die Anforderung der Klimatisierung als wichtigster Punkt gewährleistet bleiben. Hierbei sind ausreichende und erreichbare Sauerstoffbehälter und -masken für die maximale Personenanzahl, die im CRC anwesend sein können, zu gewährleisten.

Die alternative Nutzung von CRCs führt zu Vorteilen wie eine zusätzliche Geldeinnahmequelle für die Airline durch bezahlte Benutzung der Einrichtungsgegenstände des CRC. Die Ausstattung mit Sportgeräten (Laufband/Trimmgeräte/Ergometer etc.) führt zu vorbeugenden Gesundheitsmaßnahmen. Ferner werden Kultur- und Sozialtreffpunkte im Flugzeug geschaffen, die das Fliegen kurzweiliger gestalten. Außerdem können lange Reisen sinnvoll genutzt werden, um z.B. Konferenzen abzuhalten.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Unit
- 102: Unit
- 103: Unit
- 104: Unit
- 105: Unit
- 106: Stauschrank
- 107: Tür
- 108: Stauschrank
- 109: Staufach
- 110: Trennwand
- 201: Wand
- 202: Seite
- 203: Bett
- 204: Pfeil
- 205: Pfeil
- 206: Pfeil
- 207: Frontpanel
- 208: Wand
- 209: Bett
- 210: Bett
- 211: Bett
- 212: Decke
- 213: Boden
- 301: Rückseite
- 302: Decke
- 303: Bett
- 304: Frontpanel
- 305: Boden
- 306: Bett
- 307: Rückseite
- 308: Platte
- 309: Platte
- 401: Rückseite
- 402: Decke
- 403: Bett
- 404: Frontpanel
- 405: Boden
- 406: Bett
- 407: Frontpanel
- 408: Frontpanel
- 409: Rückseite
- 410: Pfeil
- 411: Seitenwand
- 412: Seitenwand
- 501: Rückseite
- 502: Decke
- 503: Frontpanel
- 504: Bett
- 505: Boden
- 506: Frontpanel
- 507: Pfeil
- 508: Bett
- 509: Bett mit Frontpanel
- 601: Rückseite
- 602: Decke
- 603: Frontpanel
- 604: Bett
- 605: Boden
- 606: Frontpanel
- 607: Pfeil
- 608: Bett
- 609: Bett
- 701: Bett
- 702: Bett
- 703: Rückseite
- 704: Seitenwand
- 705: Seitenwand
- 706: Frontpanel
- 707: Bett
- 801: Bett
- 802: Bett
- 803: Frontpanel
- 804: Bett
- 805: Seitenwand
- 806: Seitenwand
- 807: Pfeil
- 901: Rückseite
- 902: Decke
- 903: Frontpanel
- 904: Bett
- 905: Boden
- 906: Bett
- 907: Rückseite
- 908: Pfeil
- 909: Pfeil
- 910: Frontpanel
- 911: Seitenwand
- 1001: Rückseite
- 1002: Decke
- 1003: Frontpanel
- 1004: Bett
- 1005: Bett
- 1006: Frontpanel
- 1007: Boden
- 1008: Seitenwand
- 1009: Gelenk
- 1010: Gelenk
- 1011: Gelenk
- 1101: Seitenwand
- 1102: Aussparung
- 1103: Aussparung
- 1104: Frontpanel
- 1105: Bereich
- 1106: Ablagemöglichkeit
- 1107: Bereich
- 1108: Bereich
- 1201: Bett
- 1202: Frontpanel
- 1203: Bett
- 1204: Bett
- 1205: Frontpanel
- 1206: Ablagemöglichkeit
- 1207: Unit
- 1208: Unit
- 1209: Seitenwand
- 1210: Seitenwand
- 1301: Bett
- 1302: Frontpanel
- 1303: Bett
- 1304: Frontpanel
- 1305: Seitenwand
- 1306: Seitenwand
- i307: Versorgungskanal
- 1308: Bereich
- 1309: Ablagemöglichkeit
- 1310: Versorgungskanal
- 1311: Bereich
- 1401: Unit
- 1402: Unit
- 1403: Unit
- 1404: Freier Raum
- 1405: Unit
- 1406: Unit
- 1407: Freier Raum
- 1408: Unit
- 1409: Unit
- 1410: Unit
- 1411: Unit
- 1412: Unit
- 1501: Unit
- 1502: Unit
- 1503: Unit
- 1504: Freier Raum
- 1505: Unit
- 1506: Unit
- 1601: Unit
- 1602: Unit
- 1603: Unit
- 1604: Unit
- 1605: Unit
- 1701: Unit
- 1702: Unit
- 1703: Unit
- 1704: Wadenmassagegerät
- 1705: Rückenmassagegerät
- 1706: Wadenmassagegerät
- 1707: Nackenmassagegerät
- 1801: Rückenmassagegerät
- 1802: Wadenmassagegerät
- 1803: Massagematte
- 1804: Nackenmassagegerät
- 1901: Unit
- 1902: Wadenmassagegerät
- 2001: Nackenmassagegerät
- 2002: Wadenmassagegerät
- 2003: Frontpanel
- 2004: Ausbuchtung
- 2101: Massagematte
- 2102: Massagematte
- 2103: Freier Raum
- 2104: Unit
- 2201: Unit
- 2202: Sitzbank
- 2203: Konfrenztisch
- 2204: Sitzhocker
- 2205: Monitor
- 2206: Arm
- 2207: Unit
- 2208: Unit
- 2301: Unit
- 2302: Arm
- 2303: Monitor
- 2304: Unit
- 2305: Konferenztisch
- 2306: Stehhilfe
- 2307: Unit
- 2401: Sitzbank
- 2402: Konferenztisch
- 2403: Sitzhocker
- 2404: Unit
- 2501: Unit
- 2502: Konferenztisch
- 2503: Stehhilfe
- 2601: Unit
- 2602: Tisch
- 2603: Unit
- 2604: Tisch
- 2605: Freier Raum
- 2606: Unit
- 2607: Tisch
- 2608: Tisch
- 2701: Tisch
- 2702: Tisch
- 2703: Monitor
- 2704: Monitor
- 2705: Unit
- 2801: Unit
- 2802: Konferenztisch
- 2803: Unit
- 2901: Konferenztisch
- 2902: Stuhlbein
- 2903: Tischbein
- 2904: Konferenztisch
- 2905: Tischbein
- 3001: Unit
- 3002: Arm
- 3003: Monitor
- 3004: Konferenztisch
- 3005: Unit
- 3006: Stehhilfe
- 3101: Konferenztisch
- 3102: Konferenztisch
- 3103: Stehhilfen
- 3104: Tischbein
- 3105: Säule
- 3106: Konferenztisch
- 3107: Stehhilfe
- 3108: Tischbein
- 3201: Unit
- 3202: Tisch
- 3203: Unit
- 3204: Tisch
- 3205: Freier Raum
- 3206: Tisch
- 3207: Tisch
- 3208: Unit
- 3301: Monitor
- 3302: Tischbein
- 3303: Monitor
- 3304: Unit
- 3305: Unit
- 3401: Slot machine
- 3402: Hebel
- 3403: Arm
- 3501: Unit
- 3502: Unit
- 3503: Universeller Spieltisch
- 3504: Freier Raum
- 3505: Unit
- 3601: universeller Spieletisch
- 3602: Unit
- 3603: Unit
- 3701: Unit
- 3702: Universeller Spieletisch
- 3703: Unit
- 3801: Slot machine
- 3802: Slot machine
- 3803: Arm
- 3804: Arm
- 3901: Laufband
- 3902: Vorhang
- 3903: Fahrrad
- 3904: Unit
- 3905: Unit
- 4001: Snowboard
- 4002: Vorhang
- 4003: Unit
- 4004: Unit
- 4101: Vorhang
- 4102: Laufband
- 4103: Fahrrad
- 4201: Vorhang
- 4202: Snowboard
- 4301: Unit
- 4302: Vorhang
- 4303: Unit
- 4304: Laufband
- 4305: Fahrrad
- 4401: Laufband
- 4402: Fahrrad
- 4501: Unit
- 4502: Vorhang
- 4503: Snowboard
- 4601: Snowboard
- 4701: Vorhang
- 4702: Wand

## Patentansprüche

1. Ruheabteil für die Besatzung (Crew rest compartment) zur Unterbringung von zumindest einem Mitglied einer Flugzeugbesatzung, wobei das Ruheabteil derart ausgestaltet ist, dass es in einem Flugzeug angeordnet werden kann, wobei das Ruheabteil umfasst:
eine Einheit (Unit) (101, 102, 103, 104, 105) zur Unterbringung von zumindest einem Mitglied einer Flugzeugbesatzung, wobei die Einheit (101, 102, 103, 104, 105) in dem Ruheabteil angeordnet ist, wobei die Einheit (101, 102, 103, 104, 105) erste Mittel aufweist zum Verändern des Raumbedarfs der Einheit (101, 102, 103, 104, 105), wobei die Einheit (101, 102, 103, 104, 105) umfasst:
eine Liegemöglichkeit (203, 209, 210, 211, 303, 306) für das Mitglied der Flugzeugbesatzung, wobei die Liegemöglichkeit (203, 209, 210, 211, 303, 306) die ersten Mittel aufweist zum Versetzen der Liegemöglichkeit (203, 209, 210, 211, 303, 306);
**dadurch gekennzeichnet, dass** die Einheit (101, 102, 103, 104, 105) zweite Mittel aufweist zum Verändern des Raumbedarfs der Einheit, sowie
ein Frontpanel (207, 304, 404, 407, 408) zum Befestigen der Liegemöglichkeit, wobei das Frontpanel (207, 304, 404, 407, 408) die zweiten Mittel aufweist zum Zusammenklappen oder Falten des Frontpanels (207, 304, 404, 407, 408).

2. Ruheabteil nach Anspruch 1, wobei die Liegemöglichkeit (203, 209, 210, 211, 303, 306) erste Mittel aufweist zum Verschieben der Liegemöglichkeit (203, 209, 210, 211, 303, 306) innerhalb der Einheit (101, 102, 103, 104, 105).

3. Ruheabteil nach einem der vorhergehenden Ansprüche, wobei die Liegemöglichkeit (203, 209, 210, 211, 303, 306) erste Mittel aufweist zum Überführen der Liegemöglichkeit (203, 209, 210, 211, 303, 306) von einer im wesentlichen horizontalen Ausrichtung in eine im wesentlichen vertikalen Ausrichtung.

4. Ruheabteil nach einem der vorhergehenden Ansprüche, wobei die Einheit (101, 102, 103, 104, 105) dritte Mittel aufweist zum Verändern des Raumbedarfs der Einheit (101, 102, 103, 104, 105), wobei die Einheit (101, 102, 103, 104, 105) umfasst
eine Seitenwand (411, 412), wobei die Seitenwand (411, 412) dritte Mittel aufweist zum Versetzen der Seitenwand (411, 412).

5. Ruheabteil nach Anspruch 4, wobei die Seitenwand (411, 412) dritte Mittel aufweist zum Drehen der Seitenwand (411, 412) um eine Achse.

6. Ruheabteil nach einem der Ansprüche 4 oder 5, wobei die Seitenwand (411, 412) dritte Mittel aufweist zum Zusammenklappen der Seitenwand (411,412).

7. Ruheabteil nach einem der vorhergehenden Ansprüche, umfassend
eine Ablagemöglichkeit (2203), wobei die Ablagemöglichkeit (2203) vierte Mittel aufweist zum Versetzen der Ablagemöglichkeit (2203).

8. Ruheabteil nach einem der vorhergehenden Ansprüche, umfassend
einen Monitor (3303), wobei der Monitor (3303) vierte Mittel aufweist zum Versetzen des Monitors (3303).

9. Ruheabteil nach einem der Ansprüche 7 oder 8, wobei die vierte Mittel einen Teleskoparm (2903) umfassen.

10. Flugzeug umfassend ein Ruheabteil nach einem der Ansprüche 1 bis 9.

11. Verwendung eines Ruheabteils nach einem der Ansprüche 1 bis 9, wobei das Ruheabteil als Aufenthaltsraum für Passagiere eines Flugzeugs verwendet wird.

12. Verwendung nach Anspruch 11, wobei das Ruheabteil für sportliche Tätigkeiten der Passagiere verwendet wird.

## Claims

1. A crew rest compartment for accommodating at least one member of a crew of an aircraft, wherein the crew rest compartment is designed in such a manner that it can be arranged in an aircraft, the crew rest compartment comprising:
a unit (101, 102, 103, 104, 105) for accommodating at least one member of a crew of an aircraft, wherein the unit (101, 102, 103, 104, 105) is arranged in the crew rest compartment, wherein the unit (101, 102, 103, 104, 105) comprises first means for changing the space required for the unit (101, 102, 103, 104, 105), wherein
the unit (101, 102, 103, 104, 105) comprises:
a lying-down facility (203, 209, 210, 211, 303, 306) for the member of the crew of the aircraft, wherein the lying-down facility (203, 209, 210, 211, 303, 306) comprises the first means for displacing the lying-down facility (203, 209, 210, 211, 303, 306);
**characterized in that** the unit (101, 102, 103, 104, 105) comprises second means for changing the space required for the unit (101, 102, 103, 104, 105), and
a front panel (207, 304, 404, 407, 408) for attaching the lying-down facility,
wherein the front panel (207, 304, 404, 407, 408) comprises the second means for folding up or folding the front panel (207, 304, 404, 407, 408).

2. The crew rest compartment of claim 1, wherein the lying-down facility (203, 209, 210, 211, 303, 306) comprises first means for displacing the lying-down facility (203, 209, 210, 211, 303, 306) within the unit (101, 102, 103, 104, 105).

3. The crew rest compartment of any one of the preceding claims, wherein the lying-down facility (203, 209, 210, 211, 303, 306) comprises first means for converting the lying-down facility (203, 209, 210, 211, 303, 306) from an essentially horizontal alignment to an essentially vertical alignment.

4. The crew rest compartment of any one of the preceding claims, wherein the unit (101, 102, 103, 104, 105) comprises third means for changing the space required for the unit (101, 102, 103, 104, 105), wherein the unit (101, 102, 103, 104, 105) comprises
a sidewall (411, 412), wherein the sidewall (411, 412) comprises third means for displacing the sidewall (411, 412).

5. The crew rest compartment of claim 4, wherein the sidewall (411, 412) comprises third means for rotating the sidewall (411, 412) on an axis.

6. The crew rest compartment of one of claims 4 or 5, wherein the sidewall (411, 412) comprises third means for folding up the sidewall (411, 412).

7. The crew rest compartment of one of the preceding claims, comprising
a storage space (2203), wherein the storage space (2203) comprises fourth means for displacing the storage space (2203).

8. The crew rest compartment of one of the preceding claims, comprising
a monitor (3303), wherein the monitor (3303) comprises fourth means for displacing the monitor (3303).

9. The crew rest compartment of one of claims 7 or 8, wherein the fourth means comprise a telescopic arm (2903).

10. An aircraft comprising a crew rest compartment of any one of claims 1 to 9.

11. The use of a crew rest compartment of any one of claims 1 to 9, wherein the crew rest compartment is used as an accommodation area for passengers of an aircraft.

12. The use of claim 11, wherein the crew rest compartment is used for sports activities by passengers.

## Revendications

1. Compartiment de repos pour l'équipage destiné à loger au moins un membre de l'équipage d'un avion, le compartiment de repos étant réalisé de façon à pouvoir être disposé dans un avion et le compartiment de repos comprenant :
une unité (101, 102, 103, 104, 105) destinée à loger au moins un membre de l'équipage d'un avion, l'unité (101, 102, 103, 104, 105) étant disposée dans le compartiment de repos, l'unité (101, 102, 103, 104, 105) présentant des premiers moyens permettant de modifier l'encombrement de l'unité (101, 102, 103, 104, 105), l'unité (101, 102, 103, 104, 105) comprenant :
un système de couchage (203, 209, 210, 211, 303, 306) pour le membre de l'équipage de l'avion, le système de couchage (203, 209, 210, 211, 303, 306) présentant les premiers moyens permettant de décaler le système de couchage (203,209,210,211,303,306);
**caractérisé par le fait que** l'unité (101, 102, 103, 104, 105) présente des seconds moyens permettant de modifier l'encombrement de l'unité, ainsi que un panneau avant (207, 304, 404, 407, 408) permettant de fixer le système de couchage, le panneau avant (207, 304, 404, 407, 408) présentant les seconds moyens permettant de rabattre ou replier le panneau avant (207, 304, 404, 407, 408).

2. Compartiment de repos selon la revendication 1, le système de couchage (203, 209, 210, 211, 303, 306) présentant des premiers moyens permettant de déplacer le système de couchage (203, 209, 210, 211, 303, 306) à l'intérieur de l'unité (101, 102, 103, 104, 105).

3. Compartiment de repos selon l'une des revendications précédentes, le système de couchage (203, 209, 210, 211, 303, 306) présentant des premiers moyens pennettant de transférer le système de couchage (203, 209, 210, 211, 303, 306) d'une direction sensiblement horizontale à une direction sensiblement verticale.

4. Compartiment de repos selon l'une des revendications précédentes, l'unité (101, 102, 103, 104, 105) présentant des troisièmes moyens permettant de modifier l'encombrement de l'unité (101, 102, 103, 104, 105), l'unité (101, 102, 103, 104, 105) comprenant une paroi latérale (411, 412), la paroi latérale (411, 412) présentant des troisièmes moyens permettant de décaler la paroi latérale (411, 412).

5. Compartiment de repos selon la revendication 4, la paroi latérale (411, 412) présentant des troisièmes moyens permettant de faire pivoter la paroi latérale (411, 412) autour d'un axe.

6. Compartiment de repos selon l'une des revendications 4 ou 5, la paroi latérale (411,412) présentant des troisièmes moyens permettant de rabattre la paroi latérale (411, 412).

7. Compartiment de repos selon l'une des revendications précédentes, comprenant une possibilité de rangement (2203), la possibilité de rangement (2203) présentant des quatrièmes moyens permettant de décaler la possibilité de rangement (2203).

8. Compartiment de repos selon l'une des revendications précédentes, comprenant un moniteur (3303), le moniteur (3303) présentant des quatrièmes moyens permettant de décaler le moniteur (3303).

9. Compartiment de repos selon l'une des revendications 7 ou 8, les quatrièmes moyens comprenant un bras télescopique (2903).

10. Avion comprenant un compartiment de repos selon l'une des revendications 1 à 9.

11. Utilisation d'un compartiment de repos selon l'une des revendications 1 à 9, le compartiment de repos étant utilisé comme salon pour des passagers d'un avion.

12. Utilisation selon la revendication 11, le compartiment de repos étant utilisé pour des activités sportives des passagers.
